# EUROPEAN PATENT APPLICATION

(11) **EP 4 648 383 A1**
(43) Date of publication of application: **12.11.2025**
(21) Application number: 24755864.6
(22) Date of filing: 15.01.2024
(51) Int. Cl.: H04L 65/1016, H04L 65/1046, H04L 65/403, H04L 65/80, H04N 7/14, H04N 7/15

(54) **COMMUNICATION METHOD, APPARATUS AND SYSTEM**

(30) Priority: 17.02.2023 CN 202310172147
(71) Applicant: Huawei Technologies Co., Ltd., Shenzhen, Guangdong 518129 (CN)
(72) Inventor: SUN, Zhao, Shenzhen, Guangdong 518129 (CN); ZUO, Jun, Shenzhen, Guangdong 518129 (CN); LIU, Liangliang, Shenzhen, Guangdong 518129 (CN)
(74) Representative: Maiwald GmbH
(86) International application number: PCT/CN2024/072355
(87) International publication number: WO 2024/169489

(57) **Abstract**

This application provides a communication method, apparatus, and system. A method performed by a first communication device includes: The first communication device sends first capability information to a second communication device, where the first capability information indicates whether a video that can be sent and/or received by the first communication device is an HDR video or a non-HDR video; the first communication device receives first indication information from the second communication device, where the first indication information indicates whether a video to be sent by the second communication device to the first communication device and/or a video to be received by the second communication device from the first communication device is an HDR video or a non-HDR video; and the first communication device sends a video to the second communication device and/or receives a video from the second communication device based on the first indication information. Based on the foregoing solution, video interaction between different communication devices can be better performed.

## Description

This application claims priority to Chinese Patent Application No. 202310172147.8, filed with the China National Intellectual Property Administration on February 17, 2023 and entitled "COMMUNICATION METHOD, APPARATUS, AND SYSTEM", which is incorporated herein by reference in its entirety.

### TECHNICAL FIELD

This application relates to the field of communication technologies, and in particular, to a communication method, apparatus, and system.

### BACKGROUND

High dynamic range (high dynamic range, HDR) videos offer a broader brightness range compared with standard dynamic range (standard dynamic range, SDR) videos, enabling them to showcase more intricate details. Therefore, if communication devices can [interact|communicate] with each other via HDR videos (instead of conventional videos), the display effect of pictures can be enhanced, thereby improving user experience.

However, not all communication devices can support HDR videos. If a communication device that receives an HDR video does not support an HDR video, the display effect of the video deteriorate, thereby degrading user experience. For example, the receiver cannot correctly decode the HDR video, abnormal colors may appear in the video picture. Therefore, how to enable better video interaction between different communication devices is a problem to be considered currently.

### SUMMARY

This application provides a communication method, apparatus, and system, to better perform video interaction between different communication devices.

According to a first aspect, a communication method is provided. The method may be performed by a first communication device, or may be performed by a component (such as a chip or a circuit) of the first communication device. For convenience, an example in which the method is performed by the first communication device is used herein for description. For example, the first communication device may be a terminal device, or may be an application server.

The method includes: The first communication device sends first capability information to a second communication device. The first capability information indicates whether a video that can be sent and/or received by the first communication device is a high dynamic range HDR video or a non-HDR video, and both the first communication device and the second communication device are communication devices associated with a call service. The first communication device receives first indication information from the second communication device. The first indication information indicates whether a video to be sent by the second communication device to the first communication device or a video to be received by the first communication device from the second communication device is an HDR video or a non-HDR video, and/or whether a video to be received by the second communication device from the first communication device or a video to be sent by the first communication device to the second communication device is an HDR video or a non-HDR video. The first communication device sends a video to the second communication device and/or receives a video from the second communication device based on the first indication information.

Based on the foregoing solution, the first communication device may indicate, to the second communication device, whether the first communication device can send and/or receive an HDR video, so that the second communication device may indicate, to the first communication device based on a capability of the first communication device, whether the second communication device/the first communication device is to send and/or receive an HDR video, and correspondingly, the first communication device may send a video to the second communication device and/or receive a video from the second communication device based on the indication of the second communication device. Therefore, in the solution provided in this embodiment of this application, interaction may be performed by using a video based on capabilities of communication devices. In this way, when the capabilities of the communication devices allow an HDR video, interaction may be performed by using the HDR video, to improve a display effect of a video picture; or when the capabilities of the communication devices do not allow the HDR video, interaction may be performed by using a non-HDR video, to avoid a poor display effect of the video picture caused because a receive end does not support the HDR video, while reducing resources consumed when interaction is performed by using the HDR video, so that interaction between the first communication device and the second communication device is better performed by using a video.

With reference to the first aspect, in some implementations of the first aspect, when the first capability information indicates that the video that can be sent and/or received by the first communication device is an HDR video, the first capability information further indicates an HDR standard set for the HDR video that can be sent and/or received by the first communication device.

Based on the foregoing solution, the first communication device may indicate, to the second communication device, the HDR standard set for the HDR video that can be sent and/or received by the first communication device, so that the second communication device can determine an HDR standard used for an HDR video to be transmitted between the first communication device and the second communication device, to avoid a problem of abnormal display of a video picture (for example, an abnormal color of the video picture) caused because the first communication device or the second communication device does not support an HDR standard used for a received HDR video, thereby improving a display effect of the video picture.

With reference to the first aspect, in some implementations of the first aspect, if the first indication information indicates that the video to be sent by the second communication device to the first communication device or the video to be received by the first communication device from the second communication device is an HDR video, that the first communication device sends the video to the second communication device and/or receives the video from the second communication device based on the first indication information includes: The first communication device receives an HDR video from the second communication device.

Based on the foregoing solution, the first communication device determines, based on the indication of the second communication device, that an HDR video can be sent. In this way, when a capability of the first communication device allows the HDR video, interaction may be performed by using the HDR video, to improve a display effect of a transmitted video.

With reference to the first aspect, in some implementations of the first aspect, if the first indication information further indicates an HDR standard used for the HDR video to be sent by the second communication device to the first communication device or the HDR video to be received by the first communication device from the second communication device, that the first communication device receives the HDR video from the second communication device includes: The first communication device receives an HDR video for which the HDR standard is used from the second communication device.

Based on the foregoing solution, the first communication device determines, based on the indication of the second communication device, the HDR standard for sending the HDR video. In this way, the first communication device and the second communication device can perform interaction by using the HDR video for which the HDR standard determined through negotiation is used, to avoid a failure of one party to correctly parse an HDR video sent by the other party, so that interaction between the first communication device and the second communication device is better performed by using a video.

With reference to the first aspect, in some implementations of the first aspect, if the first indication information indicates that the video to be sent by the second communication device to the first communication device or the video to be received by the first communication device from the second communication device is a non-HDR video, that the first communication device sends the video to the second communication device and/or receives the video from the second communication device based on the first indication information includes: The first communication device receives a non-HDR video from the second communication device.

Based on the foregoing solution, the first communication device determines, based on the indication of the second communication device, that no HDR video can be sent. In this way, when a capability of a communication device does not allow the HDR video, interaction may be performed by using a non-HDR video, to avoid a poor display effect of a video picture caused by a failure to correctly display the HDR video, while reducing resources consumed when interaction is performed by using the HDR video.

With reference to the first aspect, in some implementations of the first aspect, if the first indication information indicates that the video to be received by the second communication device from the first communication device or the video to be sent by the first communication device to the second communication device is an HDR video, that the first communication device sends the video to the second communication device and/or receives the video from the second communication device based on the first indication information includes: The first communication device sends an HDR video to the second communication device.

Based on the foregoing solution, the first communication device determines, based on the indication of the second communication device, that an HDR video can be received. In this way, when a capability of the second communication device allows the HDR video, interaction can be performed by using the HDR video, to better perform video interaction between different communication devices.

With reference to the first aspect, in some implementations of the first aspect, if the first indication information further indicates an HDR standard used for the video to be received by the second communication device from the first communication device or the HDR video to be sent by the first communication device to the second communication device, that the first communication device sends the HDR video to the second communication device includes: The first communication device sends an HDR video for which the HDR standard is used to the second communication device.

Based on the foregoing solution, the first communication device determines, based on the indication of the second communication device, the HDR standard for receiving the HDR video. In this way, the first communication device and the second communication device can use the HDR standard determined through negotiation to perform interaction by using the HDR video, to avoid a failure of one party to correctly parse an HDR video sent by the other party, so that interaction between different communication devices is better performed by using a video.

With reference to the first aspect, in some implementations of the first aspect, if the first indication information indicates that the video to be received by the second communication device from the first communication device or the video to be sent by the first communication device to the second communication device is a non-HDR video, that the first communication device sends the video to the second communication device and/or receives the video from the second communication device based on the first indication information includes: The first communication device sends a non-HDR video to the second communication device.

Based on the foregoing solution, the first communication device determines, based on the indication of the second communication device, that no HDR video can be received. In this way, when the capability of the second communication device does not allow the HDR video, interaction may be performed by using a non-HDR video, to reduce resources consumed by interaction performed by using the HDR video.

With reference to the first aspect, in some implementations of the first aspect, the first communication device is a first terminal device, the second communication device is a second terminal device, and the first terminal device and the second terminal device are in a same internet protocol multimedia subsystem IMS session service.

With reference to the first aspect, in some implementations of the first aspect, that the first communication device sends the first capability information to the second communication device includes: The first communication device sends an invite invite request message to the second communication device. The invite request message is used to request to establish a video call connection between the first communication device and the second communication device, and the invite request message includes the first capability information. That the first communication device receives the first indication information from the second communication device includes: The first communication device receives a response message for the invite request message from the second communication device. The response message includes the first indication information.

Based on the foregoing solution, when the first communication device and the second communication device are in a same IMS session service, the first communication device is a calling device, and the second communication device is a called device of the first communication device, the first communication device may perform capability negotiation with the second communication device in a video call connection establishment procedure without an additional procedure, thereby reducing signaling overheads.

With reference to the first aspect, in some implementations of the first aspect, that the first communication device sends the first capability information to the second communication device includes: The first communication device sends a re-invite re-invite request message to the second communication device. The re-invite request message is used to request to switch an established audio call connection between the first communication device and the second communication device to a video call connection, and the re-invite request message includes the first capability information. That the first communication device receives the first indication information from the second communication device includes: The first communication device receives a response message for the re-invite request message from the second communication device. The response message includes the first indication information.

Based on the foregoing solution, when the first communication device and the second communication device are in a same IMS session service, and the first communication device has established an audio call with the second communication device, the first communication device may perform, in a procedure of switching an audio call connection to a video call connection, capability negotiation with the second communication device without an additional procedure, thereby reducing signaling overheads.

With reference to the first aspect, in some implementations of the first aspect, the method further includes: The first communication device receives third capability information from an application server. The third capability information indicates whether a video that can be sent by the application server is an HDR video or a non-HDR video. The first communication device determines, based on the first capability information and the third capability information, whether a video to be received by the first communication device from the application server or a video to be sent by the application server to the first communication device is an HDR video or a non-HDR video. The first communication device sends second indication information to the application server. The second indication information indicates whether the video to be received by the first communication device from the application server or the video to be sent by the application server to the first communication device is an HDR video or a non-HDR video.

Based on the foregoing solution, when the first communication device and the second communication device are in a same IMS session service, the application server may initiate capability negotiation to the first communication device, to determine whether the application server can interact with the first communication device by using an HDR video, so that interaction between the application server and the first communication device is better performed by using a video.

With reference to the first aspect, in some implementations of the first aspect, after the first communication device receives the first indication information from the second communication device, the method further includes: The first communication device sends fourth capability information to the second communication device. The fourth capability information indicates whether the video that can be sent and/or received by the first communication device is a high dynamic range HDR video or a non-HDR video, and the fourth capability information is different from the first capability information. The first communication device receives third indication information from the second communication device. The third indication information indicates whether the video to be sent by the second communication device to the first communication device or the video to be received by the first communication device from the second communication device is an HDR video or a non-HDR video, and/or whether the video to be received by the second communication device from the first communication device or the video to be sent by the first communication device to the second communication device is an HDR video or a non-HDR video. The first communication device continues to send a video to the second communication device and/or receive a video from the second communication device based on the third indication information.

Based on the foregoing solution, if the video that can be sent and/or received by the first communication device changes (for example, changes from a non-HDR video that can be sent to an HDR video that can be sent), the first communication device may indicate updated capability information of the first communication device to the second communication device, so that the second communication device indicates, to the first communication device based on the updated capability information, whether the video to be sent and/or received is an HDR video or a non-HDR video. In other words, the fourth capability information is the updated capability information of the first communication device. Therefore, according to this solution, a communication device can continue to perform video transmission based on an updated capability, to avoid the following cases caused by a capability update of the communication device: when the capability of the communication device allows an HDR video, interaction is performed by using a non-HDR video, thereby degrading a display effect of a video picture; or when the capability of the communication device does not allow the HDR video, interaction is performed by using the HDR video, thereby causing a waste of bandwidth.

With reference to the first aspect, in some implementations of the first aspect, that the first communication device sends the fourth capability information to the second communication device includes: The first communication device sends a re-invite request message to the second communication device. The re-invite request message includes the fourth capability information, and the re-invite request message is used to request the second communication device to redetermine whether the video to be sent by the second communication device to the first communication device or the video to be received by the first communication device from the second communication device is an HDR video or a non-HDR video, and/or whether the video to be received by the second communication device from the first communication device or the video to be sent by the first communication device to the second communication device is an HDR video or a non-HDR video. That the first communication device receives the third indication information from the second communication device includes: The first communication device receives a response message for the re-invite request message from the second communication device. The response message includes the third indication information.

With reference to the first aspect, in some implementations of the first aspect, the first communication device is an application server, and the second communication device is a terminal device.

According to a second aspect, a communication method is provided. The method may be performed by a second communication device, or may be performed by a component (such as a chip or a circuit) of the second communication device. For convenience, an example in which the method is performed by the second communication device is used herein for description. For example, the second communication device may be a terminal device.

The communication method includes: The second communication device receives first capability information from a first communication device. The first capability information indicates whether a video that can be sent and/or received by the first communication device is a high dynamic range HDR video or a non-HDR video. The second communication device sends first indication information to the first communication device. The first indication information indicates whether a video to be sent by the second communication device to the first communication device or a video to be received by the first communication device from the second communication device is an HDR video or a non-HDR video, and/or whether a video to be received by the second communication device from the first communication device or a video to be sent by the first communication device to the second communication device is an HDR video or a non-HDR video.

Based on the foregoing solution, the second communication device may determine, based on the capability information of the first communication device and the capability information of the second communication device, whether the video to be sent by the second communication device to the first communication device or the video to be received by the first communication device from the second communication device is an HDR video or a non-HDR video, and/or whether the video to be received by the second communication device from the first communication device or the video to be sent by the first communication device to the second communication device is an HDR video or a non-HDR video, and indicate a determining result to the first communication device, so that the first communication device and the second communication device can perform video transmission based on capabilities of the two. In this way, when the capabilities of the communication devices allow the HDR video, interaction may be performed by using the HDR video, to improve a display effect of a transmitted video; or when the capabilities of the communication devices do not allow the HDR video, interaction may be performed by using a non-HDR video, to avoid a poor display effect of a video picture caused by a failure to correctly display the HDR video, while reducing resources consumed by interaction performed by using the HDR video.

With reference to the second aspect, in some implementations of the second aspect, the method further includes: The second communication device determines, based on the first capability information and the second capability information, whether the video to be sent by the second communication device to the first communication device or the video to be received by the first communication device from the second communication device is an HDR video or a non-HDR video, and/or whether the video to be received by the second communication device from the first communication device or the video to be sent by the first communication device to the second communication device is an HDR video or a non-HDR video.

Based on the foregoing solution, the second communication device may determine, based on the capability information of the first communication device and the capability information of the second communication device, whether the video to be sent by the second communication device to the first communication device or the video to be received by the first communication device from the second communication device is an HDR video or a non-HDR video, and/or whether the video to be received by the second communication device from the first communication device or the video to be sent by the first communication device to the second communication device is an HDR video or a non-HDR video. In this way, the first communication device and the second communication device can perform interaction by using an HDR video or a non-HDR video based on the capabilities of the two, so that interaction between the first communication device and the second communication device is better performed.

With reference to the second aspect, in some implementations of the second aspect, when the second communication device determines that the video to be sent by the second communication device to the first communication device or the video to be received by the first communication device from the second communication device is an HDR video, the method further includes: The second communication device sends an HDR video to the first communication device.

With reference to the second aspect, in some implementations of the second aspect, the first capability information indicates that the video that can be sent and/or received by the first communication device is an HDR video and indicates a first HDR standard set for the HDR video that can be sent and/or received by the first communication device, and the second capability information indicates that the video that can be sent and/or received by the second communication device is an HDR video and indicates a second HDR standard set for the HDR video that can be sent and/or received by the second communication device. The method further includes: The second communication device determines, in an intersection set between the first HDR standard set and the second HDR standard set, an HDR standard used for the HDR video to be sent by the second communication device to the first communication device or the HDR video to be received by the first communication device from the second communication device. The first indication information further indicates the HDR standard. That the second communication device sends the HDR video to the first communication device includes: The second communication device sends an HDR video for which the HDR standard is used to the first communication device.

Based on the foregoing solution, the second communication device may determine, in the intersection set between the first HDR standard set supported by the first communication device and the second HDR standard set supported by the second communication device, the HDR standard for the HDR video to be transmitted, to avoid an abnormal color of a video picture caused when one party sends an HDR video while the other party does not support a corresponding HDR standard and cannot correctly parse the received HDR video, so that interaction between the first communication device and the second communication device is better performed.

With reference to the second aspect, in some implementations of the second aspect, when the second communication device determines that the video to be sent by the second communication device to the first communication device or the video to be received by the first communication device from the second communication device is a non-HDR video, the method further includes: The second communication device sends a non-HDR video to the first communication device.

Based on the foregoing solution, when determining that the video to be sent by the second communication device to the first communication device or the video to be received by the first communication device from the second communication device is a non-HDR video, the second communication device may send a non-HDR video to the first communication device, to reduce resources consumed by interaction performed by using an HDR video, and avoid an abnormal color of a video picture caused when the first communication device cannot parse the received HDR video.

With reference to the second aspect, in some implementations of the second aspect, when the second communication device determines that the video to be received by the second communication device from the first communication device or the video to be sent by the first communication device to the second communication device is an HDR video, the method further includes: The second communication device receives an HDR video from the first communication device.

Based on the foregoing solution, when determining that the video to be received by the second communication device from the first communication device or the video to be sent by the first communication device to the second communication device is an HDR video, the second communication device may receive an HDR video from the first communication device, so that interaction between the first communication device and the second communication device is better performed.

With reference to the second aspect, in some implementations of the second aspect, the first capability information indicates that the video that can be sent and/or received by the first communication device is an HDR video, and the first capability information further indicates the first HDR standard set for the HDR video that can be sent and/or received by the first communication device. The second capability information indicates that the video that can be sent and/or received by the second communication device is an HDR video, and the second capability information further indicates the second HDR standard set for the HDR video that can be sent and/or received by the second communication device. The method further includes: The second communication device determines, in the intersection set between the first HDR standard set and the second HDR standard set, an HDR standard used for the HDR video to be received by the second communication device from the first communication device or the HDR video to be sent by the first communication device to the second communication device. The first indication information further indicates the HDR standard. That the second communication device receives the HDR video from the first communication device includes: The second communication device receives an HDR video for which the HDR standard is used from the first communication device.

Based on the foregoing solution, the second communication device may determine the HDR standard for the HDR video in the intersection set between the first HDR standard set supported by the first communication device and the second HDR standard set supported by the second communication device, to avoid an abnormal color of a video picture caused when one party sends an HDR video while the other party does not support a corresponding HDR standard and cannot correctly parse the received HDR video, so that interaction between the first communication device and the second communication device is better performed.

With reference to the second aspect, in some implementations of the second aspect, when the second communication device determines that the video to be received by the second communication device from the first communication device or the video to be sent by the first communication device to the second communication device is a non-HDR video, the method further includes: The second communication device receives a non-HDR video from the first communication device.

Based on the foregoing solution, when determining that the video to be received by the second communication device from the first communication device or the video to be sent by the first communication device to the second communication device is a non-HDR video, the second communication device may receive a non-HDR video from the first communication device, to reduce resources consumed by interaction performed by using an HDR video, and avoid an abnormal color of a video picture caused when the second communication device cannot parse the received HDR video, so that interaction between the first communication device and the second communication device is better performed.

With reference to the second aspect, in some implementations of the second aspect, the first communication device is a first terminal device, the second communication device is a second terminal device, and the first terminal device and the second terminal device are in a same internet protocol multimedia subsystem IMS session service.

With reference to the second aspect, in some implementations of the second aspect, that the second communication device receives the first capability information from the first communication device includes: The second communication device receives an invite invite request message from the first communication device. The invite request message is used to request to establish a video call connection between the first communication device and the second communication device, and the invite request message includes the first capability information. That the second communication device sends the first indication information to the first communication device includes: The second communication device sends a response message for the invite request message to the first communication device. The response message includes the first indication information.

Based on the foregoing solution, when the first communication device and the second communication device are in a same IMS session service, the first communication device is a calling device, and the second communication device is a called device of the first communication device, the first communication device may perform capability negotiation with the second communication device in a video call connection establishment procedure without an additional procedure, thereby reducing signaling overheads.

With reference to the second aspect, in some implementations of the second aspect, that the second communication device receives the first capability information from the first communication device includes: The second communication device receives a re-invite re-invite request message from the first communication device. The re-invite request message is used to request to switch an established audio call connection between the first communication device and the second communication device to a video call connection, and the re-invite request message includes the first capability information. The second communication device sends the first indication information to the first communication device includes: The second communication device sends a response message for the re-invite request message to the first communication device. The response message includes the first indication information.

Based on the foregoing solution, when the first communication device and the second communication device are in a same IMS session service, and the first communication device has established an audio call with the second communication device, the first communication device may perform, in a procedure of switching an audio call connection to a video call connection, capability negotiation with the second communication device without an additional procedure, thereby reducing signaling overheads.

With reference to the second aspect, in some implementations of the second aspect, the method further includes: The second communication device receives third capability information from an application server. The third capability information indicates whether a video that can be sent by the application server is an HDR video or a non-HDR video. The second communication device determines, based on the second capability information and the third capability information, whether a video to be received by the second communication device from the application server or a video to be sent by the application server to the second communication device is an HDR video or a non-HDR video. The second communication device sends the third indication information to the application server. The third indication information indicates whether the video to be received by the second communication device from the application server or the video to be sent by the application server to the first communication device is an HDR video or a non-HDR video.

Based on the foregoing solution, when the first communication device and the second communication device are in a same IMS session service, the application server may initiate capability negotiation to the second communication device, to determine whether the application server can interact with the second communication device by using an HDR video, so that interaction between the application server and the second communication device is better performed.

With reference to the second aspect, in some implementations of the second aspect, after the second communication device sends the first indication information to the first communication device based on the first capability information and the second capability information of the second communication device, the method further includes: The second communication device receives fourth capability information from the first communication device. The fourth capability information indicates whether the video that can be sent and/or received by the first communication device is a high dynamic range HDR video or a non-HDR video, and the fourth capability information is different from the first capability information. The second communication device sends third indication information to the first communication device based on the fourth capability information and the second capability information of the second communication device. The third indication information indicates whether the video to be sent by the second communication device to the first communication device or the video to be received by the first communication device from the second communication device is an HDR video or a non-HDR video, and/or whether the video to be received by the second communication device from the first communication device or the video to be sent by the first communication device to the second communication device is an HDR video or a non-HDR video.

Based on the foregoing solution, if the video that can be sent and/or received by the first communication device changes (for example, changes from a non-HDR video that can be sent to an HDR video that can be sent), the first communication device may re-indicate capability information of the first communication device to the second communication device. In other words, the fourth capability information is updated capability information of the first communication device. The second communication device may indicate, to the first communication device based on the updated capability information and the capability information of the second communication device, whether the video to be sent and/or received is an HDR video or a non-HDR video. Therefore, according to this solution, a communication device can continue to perform interaction by using a video based on an updated capability, to avoid the following cases caused by a capability update of the communication device: when the capability of the communication device allows an HDR video, interaction is performed by using a non-HDR video, thereby degrading a display effect of a video picture; or when the capability of the communication device does not allow the HDR video, interaction is performed by using the HDR video, thereby causing a waste of bandwidth.

With reference to the second aspect, in some implementations of the second aspect, that the second communication device receives the fourth capability information from the first communication device includes: The second communication device receives a re-invite request message from the first communication device. The re-invite request message is used to request the second communication device to redetermine whether the video to be sent by the second communication device to the first communication device or the video to be received by the first communication device from the second communication device is an HDR video or a non-HDR video, and/or whether the video to be received by the second communication device from the first communication device or the video to be sent by the first communication device to the second communication device is an HDR video or a non-HDR video. That the second communication device sends the third indication information to the first communication device based on the fourth capability information and the second capability information of the second communication device includes: The second communication device sends a response message for the re-invite request message to the first communication device based on the fourth capability information and the second capability information. The response message includes the third indication information.

With reference to the second aspect, in some implementations of the second aspect, the second communication device is a terminal device, and the first communication device is an application server.

According to a third aspect, a communication method is provided. The method may be performed by an application server, or may be performed by a component (such as a chip or a circuit) of the application server. For convenience, an example in which the method is performed by the application server is used herein for description.

The communication method includes: The application server receives an invite request message from a first communication device. The invite request message is used to request to establish a video call connection between the first communication device and one or more second communication devices. The application server sends fifth indication information to the first communication device based on the invite request message. The fifth indication information indicates the first communication device not to send or receive a high dynamic range HDR video.

Based on the foregoing solution, in a scenario in which a plurality of communication devices perform a video call (for example, a multi-person video conference), the application server may indicate the first communication device not to send or receive an HDR video, to avoid HDR capability negotiation between the plurality of communication devices, and reduce consumed resources.

With reference to the third aspect, in some implementations of the third aspect, the invite request message includes first capability information of the first communication device, and the first capability information includes a capability of the first communication device to support an HDR video.

With reference to the third aspect, in some implementations of the third aspect, the method further includes: The application server sends sixth indication information to the one or more second communication devices. The sixth indication information indicates the one or more second communication devices not to send or receive an HDR video.

Based on the foregoing solution, in a scenario in which a plurality of communication devices perform a video call (for example, a multi-person video conference), the application server may indicate a participant (that is, the one or more second communication devices) other than the first communication device not to send or receive an HDR video, to avoid HDR capability negotiation between the plurality of communication devices, and reduce consumed resources.

With reference to the third aspect, in some implementations of the third aspect, before the application server sends the sixth indication information to the one or more second communication devices, the method further includes: The application server receives second capability information from the second communication device. The second capability information indicates a capability of the second communication device to support an HDR video.

With reference to the third aspect, in some implementations of the third aspect, that the application server sends the fifth indication information to the first communication device based on the invite request message includes: The application server sends a response message for the invite request message or the re-invite request message to the first communication device. The response message includes the fifth indication information.

According to a fourth aspect, a communication method is provided. The method includes: A first communication device sends first capability information to a second communication device. The first capability information indicates whether a video that can be sent and/or received by the first communication device is a high dynamic range HDR video or a non-HDR video. The second communication device receives the first capability information from the first communication device. The second communication device sends first indication information to the first communication device based on the first capability information and second capability information of the second communication device. The second capability information indicates whether a video that can be sent and/or received by the second communication device is an HDR video or a non-HDR video, and the first indication information indicates whether a video to be sent by the second communication device to the first communication device or a video to be received by the first communication device from the second communication device is an HDR video or a non-HDR video, and/or whether a video to be received by the second communication device from the first communication device or a video to be sent by the first communication device to the second communication device is an HDR video or a non-HDR video. The first communication device receives the first indication information from the second communication device. The first communication device sends a video to the second communication device and/or receives a video from the second communication device based on the first indication information.

With reference to the fourth aspect, in some implementations of the fourth aspect, the method further includes: The second communication device determines, based on the first capability information and the second capability information, whether the video to be sent by the second communication device to the first communication device or the video to be received by the first communication device from the second communication device is an HDR video or a non-HDR video, and/or whether the video to be received by the second communication device from the first communication device or the video to be sent by the first communication device to the second communication device is an HDR video or a non-HDR video.

With reference to the fourth aspect, in some implementations of the fourth aspect, when the second communication device determines that the video to be sent by the second communication device to the first communication device or the video to be received by the first communication device from the second communication device is an HDR video, the method further includes: The second communication device sends an HDR video to the first communication device. That the first communication device sends the video to the second communication device and/or receives the video from the second communication device based on the first indication information includes: The first communication device receives the HDR video from the second communication device based on the first indication information. The first indication information indicates that the video to be sent by the second communication device to the first communication device or the video to be received by the first communication device from the second communication device is an HDR video.

With reference to the fourth aspect, in some implementations of the fourth aspect, when the second communication device determines that the video to be sent by the second communication device to the first communication device or the video to be received by the first communication device from the second communication device is a non-HDR video, the method further includes: The second communication device sends a non-HDR video to the first communication device. That the first communication device sends the video to the second communication device and/or receives the video from the second communication device based on the first indication information includes: The first communication device receives the non-HDR video from the second communication device based on the first indication information. The first indication information indicates that the video to be sent by the second communication device to the first communication device or the video to be received by the first communication device from the second communication device is a non-HDR video.

With reference to the fourth aspect, in some implementations of the fourth aspect, when the second communication device determines that the video to be received by the second communication device from the first communication device or the video to be sent by the first communication device to the second communication device is an HDR video, the method further includes: The second communication device receives an HDR video from the first communication device. That the first communication device sends the video to the second communication device and/or receives the video from the second communication device based on the first indication information includes: The first communication device sends the HDR video to the second communication device based on the first indication information. The first indication information indicates that the video to be received by the second communication device from the first communication device or the video to be sent by the first communication device to the second communication device is an HDR video.

With reference to the fourth aspect, in some implementations of the fourth aspect, when the second communication device determines that the video to be received by the second communication device from the first communication device or the video to be sent by the first communication device to the second communication device is a non-HDR video, the method further includes: The second communication device receives a non-HDR video from the first communication device. That the first communication device sends the video to the second communication device and/or receives the video from the second communication device based on the first indication information includes: The first communication device sends the non-HDR video to the second communication device based on the first indication information. The first indication information indicates that the video to be received by the second communication device from the first communication device or the video to be sent by the first communication device to the second communication device is a non-HDR video.

According to a fifth aspect, a communication method is provided. The method includes: A first communication device sends an invite invite request message to an application server. The invite request message is used to request to establish a video call connection between the first communication device and one or more second communication devices. The application server receives the invite request message from the first communication device. The application server sends fifth indication information to the first communication device based on the invite request message. The fifth indication information indicates the first communication device not to send or receive a high dynamic range HDR video.

With reference to the fifth aspect, in some implementations of the fifth aspect, the invite request message includes first capability information of the first communication device, and the first capability information includes a capability of the first communication device to support an HDR video.

With reference to the fifth aspect, in some implementations of the fifth aspect, the method further includes: The application server sends sixth indication information to the one or more second communication devices. The sixth indication information indicates the one or more second communication devices not to send or receive an HDR video.

According to a sixth aspect, this application provides a processor, configured to perform the method provided in any one of the first aspect to the third aspect. In a process of performing these methods, a process of sending information and a process of obtaining/receiving information in the methods may be understood as a process of outputting the information by the processor and a process of receiving the input information by the processor. When outputting the information, the processor outputs the information to a transceiver, so that the transceiver transmits the information. After the information is output by the processor, other processing may further need to be performed on the information, and then processed information arrives at the transceiver. Similarly, when the processor receives the input information, the transceiver obtains/receives the information, and inputs the information into the processor. Further, after the transceiver receives the information, other processing may need to be performed on the information, and then processed information is input into the processor.

According to the foregoing principle, for example, receiving a request message as mentioned in the foregoing methods may be understood as receiving input information by the processor.

Processor-related operations such as transmitting, sending, and obtaining/receiving may be more generally understood as operations such as outputting, receiving, and inputting of the processor, instead of transmitting, sending, and receiving operations directly performed by a radio frequency circuit and an antenna, unless otherwise specified, or provided that the operations do not contradict actual functions or internal logic of the operations in related descriptions.

In an implementation process, the processor may be a processor specially configured to perform these methods, or a processor that executes computer instructions in a memory to perform these methods, for example, a general-purpose processor. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

According to a seventh aspect, a computer-readable storage medium is provided. The computer-readable medium stores program code for execution by a device, and the program code includes instructions for performing the method provided in any one of the first aspect to the third aspect.

According to an eighth aspect, a computer program product including instructions is provided. When the computer program product runs on a computer, the computer is caused to perform the method provided in any one of the first aspect to the third aspect.

According to a ninth aspect, a chip is provided. The chip includes a processor and a communication interface. The processor reads, through the communication interface, instructions stored in a memory, to perform the method provided in any one of the first aspect to the third aspect.

Optionally, in an implementation, the chip may further include the memory. The memory stores the instructions, and the processor is configured to execute the instructions stored in the memory. When the instructions are executed, the processor is configured to perform the method provided in any one of the first aspect to the third aspect.

According to a tenth aspect, a communication system is provided. The communication system includes a first communication device configured to perform the method shown in the first aspect, and a second communication device configured to perform the method shown in the second aspect.

### BRIEF DESCRIPTION OF DRAWINGS

FIG. 1 is diagram of a network architecture suitable for an embodiment of this application;
FIG. 2 is a diagram of another network architecture suitable for an embodiment of this application;
FIG. 3 is an example flowchart of establishing a video call connection according to an embodiment of this application;
FIG. 4 is an example flowchart of processing a video customized alerting tones service according to an embodiment of this application;
FIG. 5 is an example flowchart of a method 500 according to an embodiment of this application;
FIG. 6 is an example flowchart of a method 600 according to an embodiment of this application;
FIG. 7A and FIG. 7B are an example flowchart of a method 700 according to an embodiment of this application;
FIG. 8 is an example flowchart of a method 800 according to an embodiment of this application;
FIG. 9 is a block diagram of a communication apparatus according to an embodiment of this application;
FIG. 10 is a block diagram of a communication apparatus according to another embodiment of this application; and
FIG. 11 is a block diagram of a communication apparatus according to still another embodiment of this application.

### DESCRIPTION OF EMBODIMENTS

To make objectives, technical solutions, and advantages of this application clearer, the following further describes this application in detail with reference to accompanying drawings.

For ease of understanding embodiments of this application, the following points are described first.
1. In descriptions of embodiments of this application, "a plurality of" means two or more than two, unless otherwise specified.
2. In embodiments of this application, unless otherwise stated or there is a logic conflict, terms and/or descriptions in different embodiments are consistent and may be mutually referenced, and technical features in different embodiments may be combined based on an internal logical relationship between the technical features, to form a new embodiment.
3. Numbers in this application are merely used for distinguishing for ease of description, but are not intended to limit the scope of this application. Sequence numbers in this application do not mean execution sequences. Execution sequences of processes should be determined based on functions and internal logic of the processes. For example, terms "first", "second", "third", and "fourth" and various other term numerals and the like (if existent) in the specification, claims, and accompanying drawings of this application are intended to distinguish between similar objects, but do not necessarily describe a specific order or sequence. It should be understood that, data used in such a way is interchangeable in proper circumstances, so that the embodiments described herein can be implemented in an order other than the content illustrated or described herein.
4. Terms "include" and "have" and any other variants thereof mean to cover the non-exclusive inclusion, for example, a process, method, system, product, or device that includes a list of steps or units is not necessarily limited to those steps or units expressly listed, but may include other steps or units not expressly listed or inherent to such a process, method, system, product, or device.
5. In this application, "indicate" may be understood as "enable", and "enable" may include "directly enable" and "indirectly enable". When a piece of information is described as being used to enable A, the information may directly enable A or indirectly enable A, and it does not mean that the information definitely carries A.

Information enabled by information is referred to as to-be-enabled information. In a specific implementation process, the to-be-enabled information may be enabled in many manners, for example but not limited to, directly enabling the to-be-enabled information, such as the to-be-enabled information or an index of the to-be-enabled information. Alternatively, the to-be-enabled information may be indirectly enabled by enabling other information, where there is an association relationship between the other information and the to-be-enabled information. Alternatively, the to-be-enabled information may have only a part enabled, while another part of the to-be-enabled information is known or agreed in advance. For example, specific information may be enabled based on a pre-agreed (for example, specified in a protocol) sequence of various pieces of information, to reduce enabling overheads to some extent. In addition, common parts of various pieces of information may be further identified and enabled together, to reduce enabling overheads caused by enabling same information separately.
6. In this application, "preconfigure" may include predefining, for example, defining in a protocol. The "predefine" may be implemented by prestoring, in a device (for example, including network elements), corresponding code, a corresponding table, or other related information that may be used for indication. A specific implementation thereof is not limited in this application.
7. In embodiments of this application, "store" or "save" may be storing in one or more memories. The one or more memories may be separately disposed, or may be integrated into an encoder or a decoder, a processor, or a communication apparatus. Alternatively, the one or more memories may be partly separately disposed, and partly integrated into a decoder, a processor, or a communication apparatus. A type of the memory may be a storage medium in any form. This is not limited in this application.
8. In embodiments of this application, a "protocol" may be a standard protocol in the communication field, for example, may include a 4th generation (4th generation, 4G) network protocol/a 5th generation (5th generation, 5G) network protocol, a new radio (new radio, NR) protocol, and a related protocol applied to a future communication system. This is not limited in this application.
9. Arrows or blocks shown by dashed lines in diagrams of the accompanying drawing part in the specification of this application represent optional steps or modules.

The technical solutions provided in this application may be applied to various communication systems, for example, a 5th generation (5th generation, 5G) communication system (or referred to as a new radio (new radio, NR) system), a 4th generation (4th generation, 4G) communication system (or referred to as a long term evolution (long term evolution, LTE) system), an LTE frequency division duplex (frequency division duplex, FDD) system, and an LTE time division duplex (time division duplex, TDD) system. The technical solutions provided in this application may also be applied to a future communication system, for example, a 6th generation (6th generation, 6G) mobile communication system.

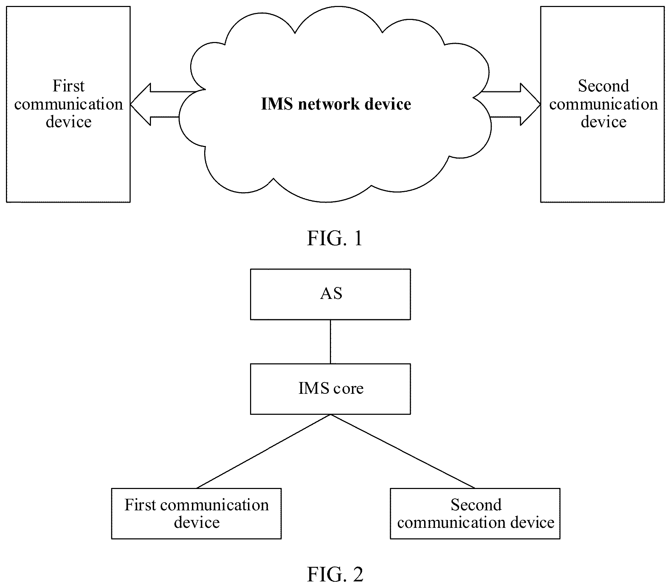

A communication system to which an embodiment of this application is applicable is illustrated below with reference to FIG. 1. It should be understood that the communication system described in this application is merely an example, and should not constitute any limitation on this application.

In the communication system shown in FIG. 1, a first communication device and a second communication device communicate with each other by using an IP multimedia subsystem (IP multimedia subsystem, IMS) network device. The first communication device and the second communication device may be any electronic device that has a video exchange capability or a call function.

For example, the first communication device or the second communication device is a user equipment (user equipment, UE). The UE may be any device that can access a network, and may also be referred to as a terminal device (terminal equipment), a terminal apparatus, an access terminal, a subscriber unit, a subscriber station, a mobile, a mobile station (mobile station, MS), a mobile terminal (mobile terminal, MT), a remote station, a remote terminal, a mobile device, a user terminal, a terminal, a wireless communication device, a user agent, or a user apparatus. The UE may be a device that provides voice/data connectivity for a user, for example, a handheld device or a vehicle-mounted device that has a wireless connection function. Currently, some examples of the terminal may be: a mobile phone (mobile phone), a tablet computer (pad), a computer having a wireless sending/receiving function (for example, a notebook computer or a palmtop computer), a mobile internet device (mobile internet device, MID), a virtual reality (virtual reality, VR) device, an AR device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 4G/5G network, a terminal device in a future evolved public land mobile network (public land mobile network, PLMN), and the like. Alternatively, the UE may be a UE in an internet-of-things (Internet-of-things, IoT) system. The IoT is an important part in future development of information technologies. A main technical feature of the IoT is to connect things to a network by using a communication technology, to implement an intelligent network of human-machine interconnection and thing-thing interconnection. The IoT technology can implement massive connections, deep coverage, and terminal power saving by using, for example, a narrowband (narrowband, NB) technology. In addition, the UE may further include an intelligent printer, a train detector, and the like, whose main functions include: collecting data (which is a function of a part of terminal devices), receiving control information and downlink data of a network device, and sending an electromagnetic wave, to transmit uplink data to the network device.

For another example, the first communication device or the second communication device is a network device in a communication network, for example, an application server.

In an example, the first communication device is a calling device (that is, a device that initiates a call), and the second communication device is a called device (that is, a device that receives the call). In another example, the first communication device is a called device, and the second communication device is a calling device.

In embodiments of this application, the IMS network device may be a set of a plurality of devices that have voice and multimedia service processing capabilities, or may be understood as a set of a plurality of servers that have audio, video, and multimedia service processing capabilities. In an example, the IMS network device includes an IMS core (IMS Core) and an AS. The first communication device and the second communication device may be connected to the AS by using the IMS core. A specific architecture is shown in FIG. 2. It may be understood that the IMS network device may further include another network device. This is not limited in this application.

The IMS core includes a call session control function (call session control function, CSCF) network element and an IMS access media gateway (access media gateway, AGW). The network elements in the IMS core and the AS are sequentially illustrated below.
1. Call session control function (call session control function, CSCF) network element: The CSCF is a functional entity inside an IMS, and is a core of the entire IMS. The CSCF is mainly responsible for processing signaling control in a multimedia call session process. The CSCF manages user authentication of the IMS and quality of service (quality of service, QoS) on an IMS bearer plane, cooperates with another network element to perform session initiation protocol (session initiation protocol, SIP) session control, service negotiation, and resource allocation, and the like. For convenience of description, the CSCF network element in this application is referred to as the "CSCF".

The CSCF may communicate with a terminal device, and the CSCF may communicate with a gateway device. For example, the CSCF may select a gateway device for communication with a terminal device. In addition, the CSCF may allocate routing information, for example, an IP address or a port, to the terminal device and the gateway device.

By way of example rather than limitation, the CSCF is classified into a proxy-CSCF (proxy-CSCF, P-CSCF), an interrogating-CSCF (interrogating-CSCF, I-CSCF), a serving-CSCF (serving-CSCF, S-CSCF), and the like based on functions.

The P-CSCF is an entry point for a user to access the IMS network, and is mainly responsible for forwarding SIP signaling between the IMS user and a home network. The I-CSCF is a unified entry point of a home network of an IMS user, and is responsible for allocating or querying for an S-CSCF that serves the user.

It may be understood that the P-CSCF, the S-CSCF, and the I-CSCF may be independently disposed in different entities, or may be integrated into a same entity. This is not limited in this application.

2. IMS access media gateway (access media gateway, AGW): The IMS AGW may provide functions of an IMS network access gateway and media gateway.

It may be understood that the CSCF and the IMS AGW may be collectively referred to as the IMS core. A manner of signaling exchange between network elements in the IMS core is not limited in this application.

3. Application server (application server, AS): The AS is an upper-layer application-layer device in the IMS system, and provides basic services and supplementary services, for example, multimedia conference, video customized alerting tone, video customized ringing signal, convergent communication, short message service gateway, standard console, and other services.

The foregoing network architecture used in embodiments of this application is merely an example, and a network architecture suitable for embodiments of this application is not limited thereto. Any network architecture that can implement functions of the foregoing network elements is suitable for embodiments of this application. That is, a network architecture and a service scenario that are described in embodiments of this application are intended to more clearly describe the technical solutions in embodiments of this application, and do not constitute a limitation on the technical solutions provided in embodiments of this application. A person of ordinary skill in the art may learn that, as the network architecture evolves and a new service scenario emerges, the technical solutions provided in embodiments of this application are also applicable to similar technical problems.

It may be further understood that the network elements or devices listed in the foregoing network architecture are merely examples for description, and the network architecture suitable for this application may further include another network element or device. This is not limited in this application.

It may be further understood that names of the foregoing network elements or devices are defined only for ease of distinguishing between different functions, and should not constitute any limitation on this application. This application does not exclude a possibility of using other names in a 4G network, a 5G network, and another future network. For example, in a 6G network, a part or all of the network elements may reuse terms in 4G/5G, or may use other names.

In embodiments of this application, the communication device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more computer operating systems that implement service processing by using a process (Process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be a terminal device or a network device, or a functional module that is in a terminal device or a network device and that can invoke and execute the program.

In addition, aspects or features in embodiments of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to a magnetic storage component (for example, a hard disk drive, a floppy disk, or a magnetic tape), an optical disc (for example, a compact disc (compact disc, CD), a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media for storing information. The term "machine-readable medium" may include but is not limited to a radio channel and various other media that can store, contain, and/or carry instructions and/or data.

For ease of understanding the technical solutions in embodiments of this application, before the solutions in embodiments of this application are described, some terms or concepts that may be used in embodiments of this application are described first.

### I. IMS session

The IMS call in embodiments of this application refers to a service in which a communication device as a calling identity or a called identity participates in a voice call or a video call with one or more other communication devices via a network element in the IMS. The IMS session may also be referred to as an IMS call or the like.

The IMS session may cover an entire process from the start of dialing to the end of the call, or may cover a part of the process from the start of the dialing to the end of the call, for example, a process from the parties that participate in the IMS session entering a call state to the end of the call.

The IMS session may be in a one-to-one form or a one-to-many (for example, a conference) form. In embodiments of this application, the one-to-one form is used as an example, but all related solutions may be used in the one-to-many form.

### II. Voice call and video call

The voice call in embodiments of this application is a call in which audio content is transmitted in real time between participant user equipment devices in an IMS session to implement voice interaction. The video call in embodiments of this application is a call in which audio content and/or video content is transmitted in real time between participant user equipment devices in an IMS session to implement interaction using a video. The voice call and the video call may be collectively referred to as an audio/video call.

### III. High dynamic range HDR video

The HDR video is a picture-enhanced video. Compared with a non-HDR video such as a standard dynamic range (standard dynamic range, SDR) video, the HDR video may be displayed within a larger brightness range. To be specific, a range between a maximum brightness and a minimum brightness in a picture of the HDR video is wider, bright picture content is brighter, and dark picture content is darker. In the HDR video, even in an area with a very large or small brightness, abundant details can still be displayed.

For example, compared with the SDR video, the HDR video may have improvements in the following three dimensions:
(1) A brightness range is expanded from 0.1-100 nits to 0.01/0.001-1000/10000 nits.
(2) A color range is expanded from a BT.709 color gamut to a BT.2020 color gamut.
(3) A contrast is expanded from 8 bits to 10/12 bits, and a higher contrast can be provided in combination with a higher brightness range and more abundant colors.

It may be understood that a video that can be sent and/or received by a communication device may be an HDR video, or may be a non-HDR video. For example, it is possible that a communication device can send an HDR video and receive an HDR video; or a communication device can only send an HDR video but cannot receive an HDR video; or a communication device can only receive an HDR video but cannot send an HDR video; or a communication device cannot send an HDR video or receive an HDR video.

In embodiments of this application, that the communication device can send an HDR video (or in other words, the video that can be sent by the communication device is an HDR video) means that the communication device has a capability of collecting an HDR video, encoding the HDR video, and sending an encoded HDR video to another communication device; and that the communication device can receive an HDR video (or in other words, the video that can be received by the communication device is an HDR video) means that the communication device has a capability of receiving, decoding, and displaying an HDR video.

It may be further understood that different HDR standards, for example, HDR10, HDR10+, Dolby Vision (Dolby Vision)/Dolby Vision IQ (Dolby Vision IQ), hybrid log-gamma (hybrid log-gamma, HLG), and HDR Vivid (HDR Vivid), may be used for different HDR videos. In an example, Table 1 shows some parameters or features corresponding to different HDR standards.

**Table 1**

| | HDR10 | HDR10+ | Dolby Vision/Dolby Vision IQ | HLG | HDR Vivid |
|---|---|---|---|---|---|
| Metadata | Static (SMPTE ST 2086) | Dynamic (SMPTE ST 2094-40) | Dynamic (SMPTE ST 2094-10) | None | Dynamic (CUVA 005-2020) |
| Codec support | H.265 | H.265/VP9/AV1 | H.264/H.265/SVC | H.265 | H.265/H.266/AVS2/AVS3 |

It can be learned from Table 1 that HDR10 uses static metadata (the static metadata is standardized by SMPTE ST 2086). The metadata is used to carry some additional information (such as a peak brightness of a picture) of an HDR video, and can be used to help a display device to display picture content in a better manner. The use of the static metadata means that the same metadata is used in a video to control colors and details of each frame of picture, and the metadata does not change between frames. In addition, HDR10 supports the H.265 codec technology. HDR10+ uses dynamic metadata (the dynamic metadata is standardized by SMPTE ST 2094-40). The dynamic metadata allows metadata to be organized for each frame or each scene. In this way, when the scene changes, tone mapping may be performed based on the metadata corresponding to each frame or each scene, to adjust brightness and color ranges of each frame pixel to a display range suitable for a display. In addition, HDR10+ supports the H.265/VP9/AV1 codec technology. Dolby Vision/Dolby Vision IQ also uses dynamic metadata (the dynamic metadata is standardized by SMPTE ST 2094-10), and supports the H.264/H.265/SVC codec technology. HLG does not support dynamic metadata, and supports only the H.265 codec technology. HDR Vivid uses dynamic metadata (the dynamic metadata is standardized by CUVA 005-2020), and supports the H.265/H.266/AVS2/AVS3 codec technology.

It may be understood that the HDR video in this application may be a picture-enhanced video obtained by increasing a brightness and expanding a dynamic range in a conventional technology, or may be a picture-enhanced video obtained by using another technology in the future. This is not limited in this application.

### IV. Non-HDR video

The non-HDR video is a video other than the HDR video described above, and the non-HDR video may also be referred to as a "conventional video" or a "common video".

The non-HDR video may be, for example, an SDR video. Since the birth of cathode-ray tube (cathode-ray tube, CRT) displays, the SDR video is used in video display devices such as televisions, displays, and projectors by default. Currently, most video content, including game, movie, and network videos, may also be SDR videos.

In embodiments of this application, that a communication device can send a non-HDR video (or in other words, a video that can be sent by a communication device is a non-HDR video) means that the communication device cannot send an HDR video, or in other words, the communication device does not support at least one of collecting, encoding, or sending an HDR video.

### V. Video customized alerting tone

A video customized alerting tones service is a called-side service, and is a service in which a system plays a video to a calling device that is waiting when a called device rings and before a call is answered. For example, after the calling device initiates a video call to the called device, if the called device has subscribed to the video customized alerting tones service, the system plays a pleasant, colorful, or interesting short video to the calling device when the called device rings and before the call is answered, so that a calling user can enjoy a personalized customized alerting tone.

In embodiments of this application, playing/sending a video customized alerting tone to a calling device is sending content or data of the video customized alerting tone to the calling device.

### VI. Video customized ringing signal

A video customized ringing signal service is a called-side service, and is a service in which a system plays a video to a called device that is ringing before a call is answered. For example, after a calling device initiates a video call to the called device, if the called device has subscribed to the video customized ringing signal service, the system plays a pleasant, colorful, or interesting short video to the called device when the called device rings and before the call is answered, so that a called user can enjoy a personalized customized alerting tone.

In embodiments of this application, playing/sending a video customized ringing signal to a called device is sending content or data of the video customized ringing signal to the called device.

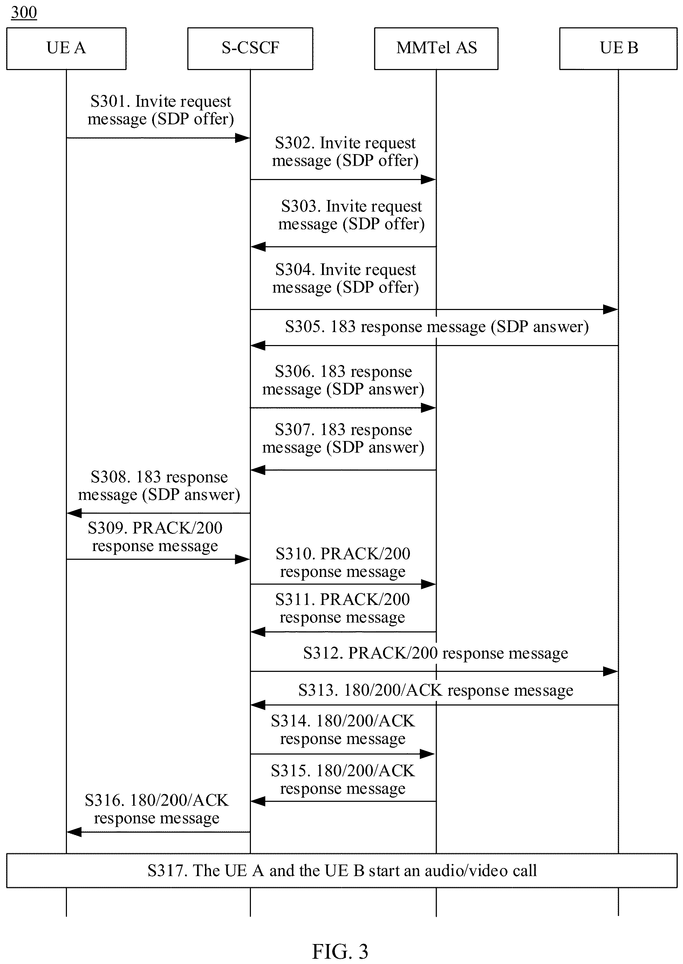

FIG. 3 is an example flowchart of establishing a video call connection according to an embodiment of this application.

S301. A UE A sends an invite request message to an S-CSCF. Correspondingly, the S-CSCF receives the invite request message from the UE A.

For example, the UE A sends the invite request message to the S-CSCF to initiate a video call to a UE B. The invite request message includes an SDP offer, and the SDP offer includes audio/video media information supported by the UE A (for example, an audio/video type supported by the UE A).

S302. The S-CSCF sends the invite request message to an MMTel AS. Correspondingly, the MMTel AS receives the invite request message from the S-CSCF.

S303. The MMTel AS sends the invite request message to the S-CSCF. Correspondingly, the S-CSCF receives the invite request message from the MMTel AS.

S304. The S-CSCF sends the invite request message to the UE B. Correspondingly, the UE B receives the invite request message from the S-CSCF.

For example, after the MMTel AS receives the invite request message from the UE A via the S-CSCF, the invite request message is forwarded by the S-CSCF to the UE B.

S305. The UE B sends a 183 response message to the S-CSCF. Correspondingly, the S-CSCF receives the 183 response message from the UE B.

S306. The S-CSCF sends the 183 response message to the MMTel AS. Correspondingly, the MMTel AS receives the 183 response message from the S-CSCF.

For example, after receiving the invite request message, the UE B returns the 183 response message to the MMTel AS via the S-CSCF. The 183 response message includes an SDP answer, and the SDP answer is audio/video media information determined by the UE B for an audio/video call between the UE A and the UE B.

S307. The MMTel AS sends the 183 response message to the S-CSCF. Correspondingly, the S-CSCF receives the 183 response message from the MMTel AS.

S308. The S-CSCF sends the 183 response message to the UE A. Correspondingly, the UE A receives the 183 response message from the S-CSCF.

For example, after the MMTel AS receives the 183 response message from the UE B, the 183 response message is forwarded by the S-CSCF to the UE A. It may be understood that the 183 response message includes the SDP answer.

S309. The UE A sends a PRACK/200 response message to the S-CSCF. Correspondingly, the S-CSCF receives the PRACK/200 response message from the UE A.

S310. The S-CSCF sends the PRACK/200 response message to the MMTel AS. Correspondingly, the MMTel AS receives the PRACK/200 response message from the S-CSCF.

For example, after receiving the 183 response message, the UE A returns the PRACK/200 response message to the MMTel AS via the S-CSCF.

S311. The MMTel AS sends the PRACK/200 response message to the S-CSCF. Correspondingly, the S-CSCF receives the PRACK/200 response message from the MMTel AS.

S312. The S-CSCF sends the PRACK/200 response message to the UE B. Correspondingly, the UE B receives the PRACK/200 response message from the S-CSCF.

For example, after the MMTel AS receives the PRACK/200 response message from the UE, the PRACK/200 response message is forwarded by the S-CSCF to the UE B.

S313. The UE B sends a 180/200/ACK response message to the S-CSCF. Correspondingly, the S-CSCF receives the 180/200/ACK response message from the UE B.

S314. The S-CSCF sends the 180/200/ACK response message to the MMTel AS. Correspondingly, the S-CSCF receives the 180/200/ACK response message from the MMTel AS.

For example, after ringing or going off-hook, the UE B sends the 180/200/ACK response message to the MMTel AS via the S-CSCF.

S315. The MMTel AS sends the 180/200/ACK response message to the S-CSCF. Correspondingly, the S-CSCF receives the 180/200/ACK response message from the MMTel AS.

S316. The S-CSCF sends the 180/200/ACK response message to the UE A. Correspondingly, the UE A receives the 180/200/ACK response message from the S-CSCF.

For example, after the MMTel AS receives the 180/200/ACK response message from the UE B, the 180/200/ACK response message is forwarded by the S-CSCF to the UE A.

S317. The UE A and the UE B start a video call.

For example, the UE A and the UE B perform the video call based on the audio/video media information determined through negotiation. A specific process is not limited in this application.

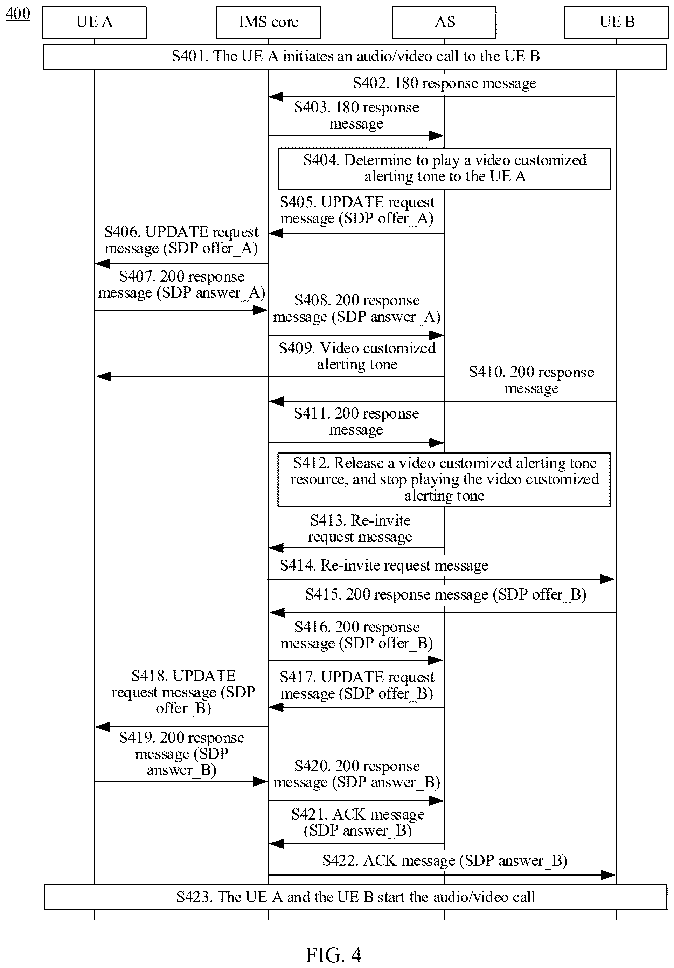

The following describes, with reference to a method 400 in FIG. 4, an example procedure of processing a video customized alerting tones service.

S401. A UE A initiates an audio/video call to a UE B. A specific process is not limited in this application.

S402. The UE B sends a 180 response message to an IMS core. Correspondingly, the IMS core receives the 180 response message from the UE B.

S403. The IMS core sends the 180 response message to an AS. Correspondingly, the AS receives the 180 response message from the IMS core.

For example, after receiving a call request from the UE A and starting ringing, the UE B sends the 180 response message to the AS via the IMS core. A manner of message forwarding inside the IMS core is not limited in this application.

S404. The AS determines to play a video customized alerting tone to the UE A.

For example, after the AS receives the 180 response message from the UE B, if it is found that the UE B has subscribed to a video customized alerting tones service, the AS determines to play a video customized alerting tone to a calling device (that is, the UE A), and applies for a video customized alerting tone resource.

Optionally, if the UE B has also subscribed to a video customized ringing signal service, the AS also determines to play a video customized ringing signal to the UE B, and applies for a video customized ringing signal resource.

S405. The AS sends an UPDATE request message to the IMS core. Correspondingly, the IMS core receives the UPDATE request message from the AS.

S406. The IMS core sends the UPDATE request message to the UE A. Correspondingly, the UE A receives the UPDATE request message from the IMS core.

For example, when the AS determines to play a video customized alerting tone to the UE A, the AS sends the UPDATE request message to the UE A via the IMS core. The UPDATE request message includes an SDP offer_A, and the SDP offer_A is audio/video media information supported by the AS.

S407. The UE A sends a 200 response message to the IMS core. Correspondingly, the IMS core receives the 200 response message from the UE A.

S408. The IMS core sends the 200 response message to the AS. Correspondingly, the AS receives the 200 response message from the IMS core.

For example, after receiving the UPDATE request message from the AS, the UE A returns the 200 response message to the AS via the IMS core. The 200 response message carries an SDP answer_A, and the SDP answer_A is audio/video media information determined by the UE A to transmit a video customized alerting tone between the AS and the UE A.

S409. The AS sends the video customized alerting tone to the UE A.

For example, after receiving the 200 response message from the UE, the AS sends the video customized alerting tone to the UE A based on the negotiated audio/video media information, or in other words, the AS plays the video customized alerting tone to the UE A.

S410. The UE B sends a 200 response message to the IMS core. Correspondingly, the IMS core receives the 200 response message from the UE B.

S411. The IMS core sends the 200 response message to the AS. Correspondingly, the AS receives the 200 response message from the IMS core.

For example, after the UE B goes off-hook, the UE B sends the 200 response message to the AS via the IMS core.

S412. The AS releases the video customized alerting tone resource, and stops playing the video customized alerting tone.

For example, after receiving the 200 response message from the UE B, the AS releases the video customized alerting tone resource, and stops playing the video customized alerting tone to the UE A.

S413. The AS sends a re-invite request message to the IMS core. Correspondingly, the IMS core receives the re-invite request message from the AS.

S414. The IMS core sends the re-invite request message to the UE B. Correspondingly, the UE B receives the re-invite request message from the IMS core.

For example, the AS sends the re-invite request message to the UE B via the IMS core to trigger media negotiation between the UE A and the UE B.

S415. The UE B sends a 200 response message to the IMS core. Correspondingly, the IMS core receives the 200 response message from the UE B.

S416. The IMS core sends the 200 response message to the AS. Correspondingly, the AS receives the 200 response message from the IMS core.

For example, after receiving the re-invite request message, the UE B returns the 200 response message to the AS via the IMS core, where the 200 response message carries an SDP offer_B. The SDP offer_B includes audio/video media information supported by the UE B.

S417. The AS sends an UPDATE request message to the IMS core. Correspondingly, the IMS core receives the UPDATE request message from the AS.

S418. The IMS core sends the UPDATE request message to the UE A. Correspondingly, the UE A receives the UPDATE request message from the IMS core.

For example, after receiving the 200 response message from the UE B, the AS sends the UPDATE request message to the UE A via the IMS core, where the UPDATE request message carries the SDP offer_B.

S419. The UE A sends a 200 response message to the IMS core. Correspondingly, the IMS core receives the 200 response message from the UE A.

S420. The IMS core sends the 200 response message to the AS. Correspondingly, the AS receives the 200 response message from the IMS core.

For example, the UE A sends the 200 response message to the AS via the IMS core, where the 200 response message carries an SDP answer_B. The SDP answer_B includes audio/video media information determined by the UE A for the audio/video call between the UE A and the UE B.

S421. The AS sends an ACK message to the IMS core. Correspondingly, the IMS core receives the ACK message from the AS.

S422. The IMS core sends the ACK message to the UE B. Correspondingly, the UE B receives the ACK message from the IMS core.

For example, after receiving the 200 response message from the UE A, the AS sends the ACK message to the UE B via the IMS core, where the ACK message carries the SDP answer_B.

S423. The UE A and the UE B start the audio/video call.

For example, the UE A and the UE B perform the video call based on the audio/video media information determined through negotiation. A specific process is not limited in this application.

The method 300 describes an example procedure of establishing an audio/video call connection between the UE A and the UE B, and the method 400 describes an example procedure in which the AS plays a video customized alerting tone to the UE A in the procedure of establishing the audio/video call between the UE A and the UE B. Therefore, both the method 300 and the method 400 relate to a process of transmitting a video between two communication devices associated with a call service. In this case, to improve a display effect of a video picture, a transmit-end device that can send a high dynamic range (HDR) video may send an HDR video to a receive-end device. However, the receive-end device may fail to accurately parse the received high dynamic range video, resulting in abnormal display of a video picture, affecting user experience, and causing a resource waste due to transmission of the high dynamic range video.

Based on the foregoing problems, an embodiment of this application provides a communication method 500. In the method 500, whether a video to be transmitted between two communication devices is an HDR video or a non-HDR video is determined depending on whether videos that can be sent and/or received by the two communication devices are HDR videos or non-HDR videos.

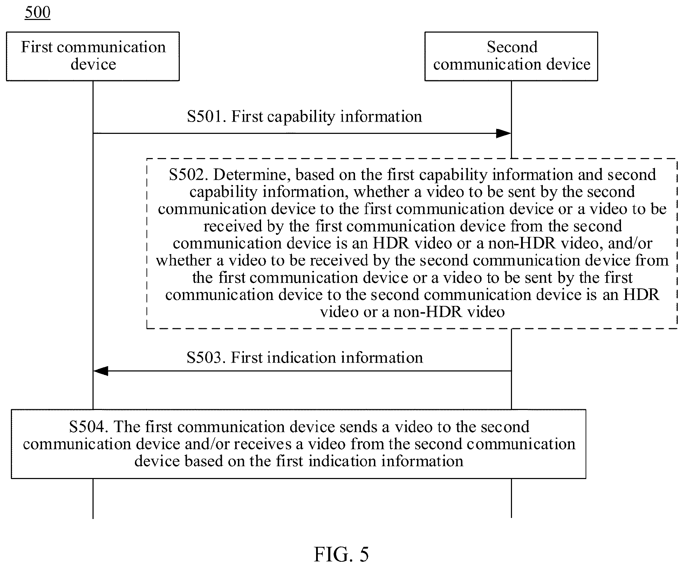

The method 500 is illustrated below with reference to steps in FIG. 5.

S501. A first communication device sends first capability information to a second communication device. Correspondingly, the second communication device receives the first capability information from the first communication device.

For example, the first communication device may send the first capability information to the second communication device before video transmission with the second communication device. The first capability information indicates whether a video that can be sent and/or received by the first communication device is an HDR video or a non-HDR video. For example, the first capability information indicates that the videos that can be sent and received by the first communication device are HDR videos. For another example, the first capability information indicates that the video that can be sent by the first communication device is an HDR video, and the video that can be received by the first communication device is a non-HDR video (or in other words, the first communication device cannot receive an HDR video). For another example, the first capability information indicates that the video that can be sent by the first communication device is a non-HDR video (or in other words, the first communication device cannot send an HDR video), and the video that can be received by the first communication device is an HDR video. For another example, the first capability information indicates that the videos that can be sent and received by the first communication device are both non-HDR videos (or in other words, indicates that the first communication device cannot send or receive an HDR video).

When the first capability information indicates that the video that can be sent and/or received by the first communication device is an HDR video, the first capability information further indicates a first HDR standard set for the HDR video that can be sent and/or received by the first communication device. The first HDR standard set includes one or more HDR standards.

In an example, both the first communication device and the second communication device are communication devices associated with a call service. The following provides example descriptions with reference to two scenarios.

In a possible application scenario (denoted as a scenario 1), the first communication device is a first terminal device, the second communication device is a second terminal device, and the first communication device and the second communication device are in an IMS session service. It may be understood that the first communication device and the second communication device may be in a same IMS or different IMSs. This is not limited in this application.

For example, the first communication device is a calling device in the IMS session service, and the second communication device is a called device in the IMS session service.

In this case, the first communication device may send the first capability information to the second communication device in a process of initiating a video call to the second communication device. A specific example (denoted as an example 1) is as follows: The first communication device sends an invite invite request message to the second communication device. The invite request message is used to request to establish a video call connection between the first communication device and the second communication device, and the invite request message includes the first capability information.

Alternatively, if the first communication device has established an audio call connection to the second communication device, the first communication device may send the first capability information to the second communication device in a process of switching the audio call connection to a video call connection. A specific example (denoted as an example 2) is as follows: The first communication device sends a re-invite re-invite request message to the second communication device. The re-invite request message is used to request to switch the established audio call connection between the first communication device and the second communication device to a video call connection, and the re-invite request message includes the first capability information.

For another example, the second communication device is a calling device in an IMS session service, and the first communication device is a called device in the IMS session service.

In this case, the first communication device may send the first capability information to the second communication device in a process in which the second communication device initiates a video call to the first communication device. A specific example (denoted as an example 3) is as follows: The second communication device sends an invite request message to the first communication device. The invite request message is used to request to establish a video call connection between the second communication device and the first communication device. After receiving the invite request message from the second communication device, the first communication device returns a response message for the invite request message to the second communication device, where the response message carries the first capability information. A format parameter of the response message is, for example, 180 or 183.

Alternatively, if the first communication device has established an audio call connection to the second communication device, the first communication device may send the first capability information to the second communication device in a process of switching the audio call connection to a video call connection. A specific manner is similar to that in the example 2, and details are not described herein again.

In another possible application scenario (denoted as a scenario 2), the first communication device is an application server, and the second communication device is a terminal device.

Specifically, for example, the first communication device is an application server, and the second communication device is a calling device in an IMS session service. In this case, the application server may send the first capability information to the second communication device when determining to play a video (for example, a video customized alerting tone) to the second communication device. A specific example (denoted as an example 4) is as follows: The second communication device sends an invite request message to a called device (for example, a third communication device) to initiate a video call. After ringing, the third communication device sends a response message for the invite request message to the application server. After receiving the response message, the application server determines whether the third communication device has subscribed to a video customized alerting tones service. If the third communication device has subscribed to the video customized alerting tones service, the application server sends, to the second communication device, an update update request message including the first capability information.

Specifically, for another example, the first communication device is an application server, and the second communication device is a called device in an IMS session service. In this case, the application server may send the first capability information to the second communication device when determining to play a video (for example, a video customized ringing signal) to the second communication device. A specific example (denoted as an example 5) is as follows: A calling device (for example, a fourth communication device) sends an invite request message to the second communication device to initiate a video call. After ringing, the second communication device sends a response message for the invite request message to the application server. After receiving the response message, the application server determines whether the second communication device has subscribed to a video customized ringing signal service. If the third communication device has subscribed to the video customized ringing signal service, the application server sends, to the second communication device, an update update request message including the first capability information.

Optionally, S502. The second communication device determines, based on the first capability information and second capability information, whether a video to be sent by the second communication device to the first communication device or a video to be received by the first communication device from the second communication device is an HDR video or a non-HDR video, and/or whether a video to be received by the second communication device from the first communication device or a video to be sent by the first communication device to the second communication device is an HDR video or a non-HDR video.

For example, after receiving the first capability information from the first communication device, the second communication device determines, based on the first capability information and the second capability information of the second communication device, whether the video to be sent by the second communication device to the first communication device or the video to be received by the first communication device from the second communication device is an HDR video or a non-HDR video, and/or whether the video to be received by the second communication device from the first communication device or the video to be sent by the first communication device to the second communication device is an HDR video or a non-HDR video. The second capability information indicates whether a video that can be sent and/or received by the second communication device is an HDR video or a non-HDR video.

In an example, the first capability information indicates that the video that can be sent and/or received by the first communication device is an HDR video, and the first capability information further indicates the first HDR standard set for the HDR video that can be sent and/or received by the first communication device. The second capability information indicates that the video that can be sent and/or received by the second communication device is an HDR video, and the second capability information further indicates a second HDR standard set for the HDR video that can be sent and/or received by the second communication device. The first HDR standard set includes one or more HDR standards, and the second HDR standard also includes one or more HDR standards.

Optionally, in this case, before performing S502, the second communication device may first determine whether an intersection set exists between the first HDR standard set and the second HDR standard set.

If no intersection set exists between the first HDR standard set and the second HDR standard set, that is, the first HDR standard set and the second HDR standard set do not include any same HDR standard, the second communication device determines that the video to be sent by the second communication device to the first communication device or the video to be received by the first communication device from the second communication device is a non-HDR video, and/or determines that the video to be received by the second communication device from the first communication device or the video to be sent by the first communication device to the second communication device is a non-HDR video.

If an intersection set exists between the first HDR standard set and the second HDR standard set, the second communication device determines, in the intersection set, an HDR standard for an HDR video to be sent by the second communication device to the first communication device or an HDR video to be received by the first communication device from the second communication device, and/or an HDR standard for an HDR video to be received by the second communication device from the first communication device or an HDR video to be sent by the first communication device to the second communication device. In this case, first indication information further indicates the HDR standard.

Optionally, when there are a plurality of HDR standards in the intersection set between the first HDR standard set and the second HDR standard set, the second communication device may determine the HDR standard in the intersection set between the first HDR standard set and the second HDR standard set according to a preconfigured rule (for example, a preconfigured HDR standard priority sequence). A specific manner is not limited in this application.

In another example, if the first capability information does not carry the first HDR standard set, the second communication device determines that an HDR standard used for the HDR video to be sent by the second communication device to the first communication device or the HDR video to be received by the first communication device from the second communication device is a default HDR standard, and/or determines that an HDR standard used for the HDR video to be received by the second communication device from the first communication device or the HDR video to be sent by the first communication device to the second communication device is the default HDR standard. The default HDR standard herein may be, for example, preconfigured for the second communication device.

Further, specific implementations in which the second communication device determines whether the video sent by the second communication device or the video to be received by the first communication device from the second communication device is an HDR video or a non-HDR video, and/or whether the video to be received by the second communication device from the first communication device or the video to be sent by the first communication device to the second communication device is an HDR video or a non-HDR video are illustrated below.

When the first capability information indicates that the videos that can be sent and received by the first communication device are HDR videos, and the second capability information indicates that the videos that can be sent and received by the second communication device are HDR videos, the second communication device determines that the video to be sent by the second communication device to the first communication device or the video to be received by the first communication device from the second communication device is an HDR video, and determines that the video to be received by the second communication device from the first communication device or the video to be sent by the first communication device to the second communication device is an HDR video.

Alternatively, when the first capability information indicates that the videos that can be sent and received by the first communication device are HDR videos, and the second capability information indicates that the video that can be sent by the second communication device is an HDR video and the video that can be received by the second communication device is a non-HDR video, the second communication device determines that the video to be sent by the second communication device to the first communication device or the video to be received by the first communication device from the second communication device is an HDR video, and determines that the video to be received by the second communication device from the first communication device or the video to be sent by the first communication device to the second communication device is a non-HDR video.

Alternatively, when the first capability information indicates that the videos that can be sent and received by the first communication device are HDR videos, and the second capability information indicates that the video that can be sent by the second communication device is a non-HDR video and the video that can be received by the second communication device is an HDR video, the second communication device determines that the video to be sent by the second communication device to the first communication device or the video to be received by the first communication device from the second communication device is a non-HDR video, and determines that the video to be received by the second communication device from the first communication device or the video to be sent by the first communication device to the second communication device is an HDR video.

Alternatively, when the first capability information indicates that the video that can be sent by the first communication device is an HDR video and the video that can be received by the first communication device is a non-HDR video, and the second capability information indicates that the videos that can be sent and received by the second communication device are HDR videos, the second communication device determines that the video to be sent by the second communication device to the first communication device or the video to be received by the first communication device from the second communication device is a non-HDR video, and determines that the video to be received by the second communication device from the first communication device or the video to be sent by the first communication device to the second communication device is an HDR video.

Alternatively, when the first capability information indicates that the video that can be sent by the first communication device is a non-HDR video and the video that can be received by the first communication device is an HDR video, and the second capability information indicates that the videos that can be sent and received by the second communication device are HDR videos, the second communication device determines that the video to be sent by the second communication device to the first communication device or the video to be received by the first communication device from the second communication device is an HDR video, and determines that the video to be received by the second communication device from the first communication device or the video to be sent by the first communication device to the second communication device is a non-HDR video.

Alternatively, when the first capability information indicates that the video that can be sent by the first communication device is an HDR video and the video that can be received by the first communication device is a non-HDR video, and the second capability information indicates that the video that can be sent by the second communication device is a non-HDR video and the video that can be received by the second communication device is an HDR video, the second communication device determines that the video to be sent by the second communication device to the first communication device or the video to be received by the first communication device from the second communication device is a non-HDR video, and determines that the video to be received by the second communication device from the first communication device or the video to be sent by the first communication device to the second communication device is an HDR video.

Alternatively, when the first capability information indicates that the video that can be sent by the first communication device is an HDR video and the video that can be received by the first communication device is a non-HDR video, and the second capability information indicates that the video that can be sent by the second communication device is an HDR video and the video that can be received by the second communication device is a non-HDR video, the second communication device determines that the video to be sent by the second communication device to the first communication device or the video to be received by the first communication device from the second communication device is a non-HDR video, and determines that the video to be received by the second communication device from the first communication device or the video to be sent by the first communication device to the second communication device is a non-HDR video.

Alternatively, when the first capability information indicates that the video that can be sent by the first communication device is a non-HDR video and the video that can be received by the first communication device is an HDR video, and the second capability information indicates that the video that can be sent by the second communication device is an HDR video and the video that can be received by the second communication device is a non-HDR video, the second communication device determines that the video to be sent by the second communication device to the first communication device or the video to be received by the first communication device from the second communication device is an HDR video, and determines that the video to be received by the second communication device from the first communication device or the video to be sent by the first communication device to the second communication device is a non-HDR video.

Alternatively, when the first capability information indicates that the video that can be sent by the first communication device is a non-HDR video and the video that can be received by the first communication device is an HDR video, and the second capability information indicates that the video that can be sent by the second communication device is a non-HDR video and the video that can be received by the second communication device is an HDR video, the second communication device determines that the video to be sent by the second communication device to the first communication device or the video to be received by the first communication device from the second communication device is a non-HDR video, and determines that the video to be received by the second communication device from the first communication device or the video to be sent by the first communication device to the second communication device is a non-HDR video.

Alternatively, when the first capability information indicates that the videos that can be sent and received by the first communication device are non-HDR videos, and/or the second capability information indicates that the videos that can be sent and received by the second communication device are non-HDR videos, the second communication device determines that the video to be sent by the second communication device to the first communication device or the video to be received by the first communication device from the second communication device is a non-HDR video, and determines that the video to be received by the second communication device from the first communication device or the video to be sent by the first communication device to the second communication device is a non-HDR video.

It may be understood that the second communication device may alternatively first determine whether the video to be transmitted between the first communication device and the second communication device is an HDR video or a non-HDR video, and then determine an HDR standard used for an HDR video to be transmitted between the first communication device and the second communication device. This is not limited in this application.

S503. The second communication device sends first indication information to the first communication device. Correspondingly, the first communication device receives the first indication information from the second communication device.

For example, the second communication device sends the first indication information to the first communication device based on the first capability information and the second capability information. The first indication information indicates whether the video to be sent by the second communication device to the first communication device or the video to be received by the first communication device from the second communication device is an HDR video or a non-HDR video, and/or whether the video to be received by the second communication device from the first communication device or the video to be sent by the first communication device to the second communication device is an HDR video or a non-HDR video.

It may be understood that, when the first indication information indicates that the video to be sent by the second communication device to the first communication device or the video to be received by the first communication device from the second communication device is an HDR video, and/or indicates that the video to be received by the second communication device from the first communication device or the video to be sent by the first communication device to the second communication device is an HDR video, the first indication information further indicates the HDR standard used for the HDR video to be transmitted between the first communication device and the second communication device.

Specific implementations in which the second communication device sends the first indication information to the first communication device are illustrated below.

Corresponding to the foregoing example 1, after receiving the invite request message from the first communication device, the second communication device returns a response message for the invite request message to the first communication device. The response message includes the first indication information. A format parameter of the response message is, for example, 180, 183, or 200.

Corresponding to the foregoing example 2, after receiving the re-invite request message from the first communication device, the second communication device returns a response message for the re-invite request message to the first communication device. The response message includes the first indication information. A format parameter of the response message is, for example, 200.

Corresponding to the foregoing example 3, after receiving the response message for the invite request message from the first communication device, the second communication device returns a PRACK/ACK message to the first communication device. The PRACK/ACK message includes the first indication information.

Corresponding to the foregoing example 4 or example 5, after receiving the update request message from the first communication device, the second communication device returns a response message for the update request message to the first communication device. The response message includes the first indication information. A format parameter of the response message is, for example, 200.

S504. The first communication device sends a video to the second communication device and/or receives a video from the second communication device based on the first indication information.

For example, after receiving the first indication information from the second communication device, the first communication device sends the video to the second communication device and/or receives the video from the second communication device based on the first indication information. Correspondingly, the second communication device sends the video to the first communication device and/or receives the video from the first communication device based on a determining result in S502. The following provides descriptions with reference to examples. It may be understood that in the following four examples, an example a may be combined with an example c or an example d, and an example b may also be combined with the example c or the example d.

Example a: When the second communication device determines that the video to be sent by the second communication device to the first communication device or the video to be received by the first communication device from the second communication device is an HDR video, the second communication device sends an HDR video to the first communication device. In this case, if the first indication information indicates that the video to be sent by the second communication device to the first communication device or the video to be received by the first communication device from the second communication device is an HDR video, the first communication device receives the HDR video from the second communication device based on the first indication information.

Optionally, the HDR standard determined by the second communication device in S502 (for a specific process, refer to descriptions in the S502 part) is used for the HDR video sent by the second communication device to the first communication device. In this case, the first indication information further indicates the HDR standard used for the HDR video to be sent by the second communication device to the first communication device or the HDR video to be received by the first communication device from the second communication device. Correspondingly, the first communication device receives the HDR video for which the HDR standard is used from the second communication device. For example, the first communication device decodes and displays the received HDR video based on the HDR standard indicated by the first indication information.

Example b: When the second communication device determines that the video to be sent by the second communication device to the first communication device or the video to be received by the first communication device from the second communication device is a non-HDR video, the second communication device sends a non-HDR video to the first communication device. In this case, if the first indication information indicates that the video to be sent by the second communication device to the first communication device or the video to be received by the first communication device from the second communication device is a non-HDR video, the first communication device receives the non-HDR video from the second communication device based on the first indication information.

Example c: When the second communication device determines that the video to be received by the second communication device from the first communication device or the video to be sent by the first communication device to the second communication device is an HDR video, the first indication information indicates that the video to be received by the second communication device from the first communication device or the video to be sent by the first communication device to the second communication device is an HDR video, and the first communication device sends an HDR video to the second communication device based on the first indication information.

Optionally, if the first indication information further indicates an HDR standard for the HDR video to be received by the second communication device from the first communication device or the HDR video to be sent by the first communication device to the second communication device, the HDR standard is used for the HDR video sent by the first communication device to the second communication device. Correspondingly, the second communication device receives the HDR video for which the HDR standard is used from the first communication device. For example, the second communication device decodes and displays the received HDR video based on the HDR standard.

Example d: When the second communication device determines that the video to be received by the second communication device from the first communication device or the video to be sent by the first communication device to the second communication device is a non-HDR video, the first indication information indicates that the video to be received by the second communication device from the first communication device or the video to be sent by the first communication device to the second communication device is a non-HDR video, and the first communication device sends a non-HDR video to the second communication device based on the first indication information. Correspondingly, the second communication device receives the non-HDR video from the first communication device.

It may be understood that, corresponding to the foregoing scenario 1 (that is, the first communication device and the second communication device are two terminal devices in an IMS session service), a video transmitted between the first communication device and the second communication device may be a video transmitted when the first communication device and the second communication device perform a video call. Corresponding to the first example of the foregoing scenario 2 (that is, the first communication device is an application server, and the second communication device is a calling device in an IMS session service), a video transmitted between the first communication device and the second communication device may be a video customized alerting tone. Corresponding to the second example of the foregoing scenario 2 (that is, the first communication device is an application server, and the second communication device is a called device in an IMS session service), a video transmitted between the first communication device and the second communication device may be a video customized ringing signal.

Further, optionally, if the video that can be sent and/or received by the first communication device changes (for example, changes from a non-HDR video that can be sent to an HDR video that can be sent), the first communication device resends capability information of the first communication device to the second communication device. For example, the first communication device sends fourth capability information to the second communication device. The fourth capability information indicates whether the video that can be sent and/or received by the first communication device is an HDR video or a non-HDR video. Specifically, for example, the first communication device sends a re-invite request message to the second communication device. The re-invite request message includes the fourth capability information, and the re-invite request message is used to request the second communication device to redetermine whether the video to be sent by the second communication device to the first communication device or the video to be received by the first communication device from the second communication device is an HDR video or a non-HDR video, and/or whether the video to be received by the second communication device from the first communication device or the video to be sent by the first communication device to the second communication device is an HDR video or a non-HDR video. It may be understood that the fourth capability information is updated capability information of the first communication device. Therefore, the fourth capability information is different from the first capability information. Correspondingly, the second communication device receives the fourth capability information from the first communication device, and then redetermines, based on the fourth capability information and the second capability information, whether the video to be sent by the second communication device to the first communication device or the video to be received by the first communication device from the second communication device is an HDR video or a non-HDR video, and/or whether the video to be received by the second communication device from the first communication device or the video to be sent by the first communication device to the second communication device is an HDR video or a non-HDR video. For a specific implementation, refer to descriptions in the S502 part. Details are not described herein again. Then, the second communication device sends third indication information to the first communication device. Specifically, for example, the second communication device sends a response message for the re-invite request message to the first communication device. The response message includes the third indication information. The third indication information indicates whether the video to be sent by the second communication device to the first communication device or the video to be received by the first communication device from the second communication device is an HDR video or a non-HDR video, and/or whether the video to be received by the second communication device from the first communication device or the video to be sent by the first communication device to the second communication device is an HDR video or a non-HDR video. For a specific implementation, refer to descriptions in the S503 part. Details are not described herein again. Correspondingly, the first communication device receives the third indication information from the second communication device, and then sends a video to the second communication device and/or receives a video from the second communication device based on the third indication information. For a specific implementation, refer to descriptions in the S504 part. Details are not described herein again.

It may be understood that a manner for information exchange between the first communication device and the second communication device is not limited in this embodiment of this application. For example, the first communication device may directly send information (for example, the first capability information) to the second communication device, or may send the information to the second communication device via another network element or device. This is not limited in this application.

Based on the foregoing solution, the first communication device may indicate, to the second communication device, whether the video that can be sent and/or received by the first communication device is an HDR video or a non-HDR video, so that the second communication device may determine, based on a capability of the first communication device and a capability of the second communication device, whether a video to be transmitted between the first communication device and the second communication device is an HDR video or a non-HDR video. Therefore, in the solution provided in this embodiment of this application, interaction may be performed by using a video based on capabilities of communication devices. In this way, when the capabilities of the communication devices allow an HDR video, interaction may be performed by using the HDR video, to improve a display effect of a video picture; or when the capabilities of the communication devices do not allow the HDR video, interaction may be performed by using a non-HDR video, to avoid a poor display effect of a video picture (for example, an abnormal color of the video picture) caused because a receive end does not support the HDR video (for example, cannot decode a received HDR video), while reducing resources consumed by interaction performed by a transmit end by using the HDR video. For example, the first communication device can send an HDR video, but the second communication device cannot receive an HDR video (for example, does not support display of the HDR video). In this case, if the second communication device receives the HDR video from the first communication device, a picture cannot be converted due to brightness and color gamut ranges, resulting in abnormal display and dull and grayish colors. According to the foregoing solution, whether interaction is to be performed by using an HDR video may be determined based on the capabilities of the two communication devices, to avoid a poor display effect of a video picture and a waste of bandwidth of a transmit end that are caused because a receive end does not support the HDR video, so that interaction between different communication devices is better performed by using a video. For another example, the first communication device can send an HDR video and the second communication device can receive an HDR video, but HDR standards supported by the first communication device and the second communication device are different. In this case, if the second communication device receives the HDR video from the first communication device, because different metadata formats are used in the different HDR standards, the second communication device cannot properly convert the received HDR video, resulting in an abnormal color of a video picture. According to the foregoing solution, only when determining that an intersection set exists between the first HDR standard set supported by the first communication device and the second HDR standard set supported by the second communication device, the second communication device further determines whether the video to be sent by the second communication device to the first communication device or the video to be received by the first communication device from the second communication device is an HDR video or a non-HDR video, and/or whether the video to be received by the second communication device from the first communication device or the video to be sent by the first communication device to the second communication device is an HDR video or a non-HDR video, to avoid a mismatch between HDR standards supported by the two communication devices between which an HDR video is transmitted, thereby improving a display effect of a video picture, and reducing an unnecessary waste of bandwidth.

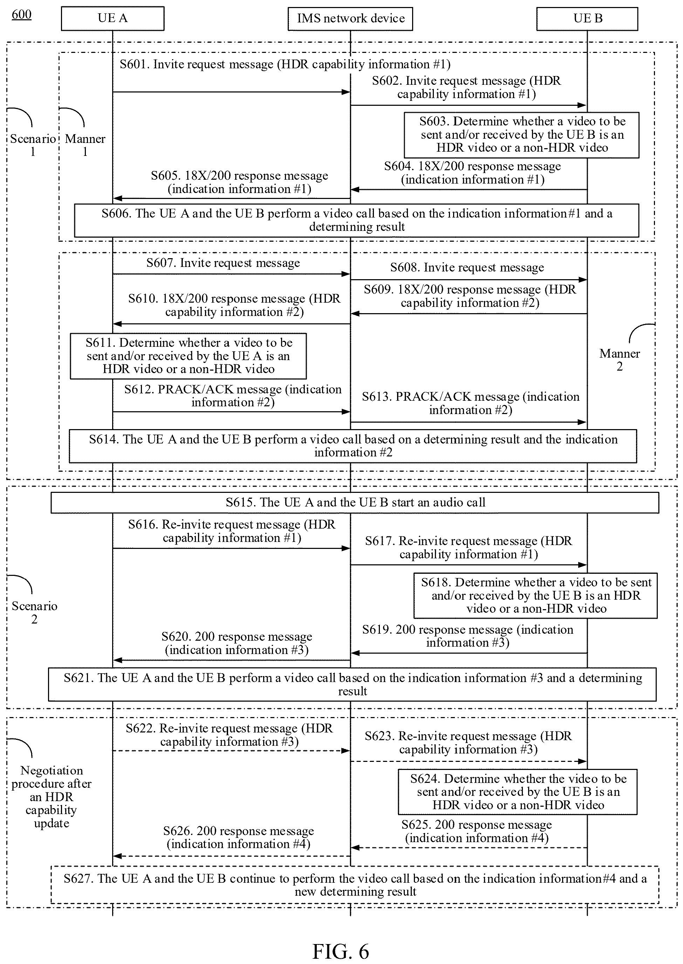

The following describes, with reference to FIG. 6, a communication method 600 provided in an embodiment of this application. It may be understood that the method 600 is a possible implementation in which the method 500 is applied to an IMS call scenario. In a manner 1 of a scenario 1 or a scenario 2 of the method 600, an example in which the first communication device is a UE A and the second communication device is a UE B is used for description. In a manner 2 of the scenario 1 of the method 600, an example in which the first communication device is the UE B and the second communication device is the UE A is used for description. The method 600 is illustrated below with reference to the two possible scenarios.

Scenario 1: In a process of establishing a video call connection between the UE A and the UE B, whether a video to be transmitted (sent and/or received) between the UE A and the UE B is an HDR video or a non-HDR video is determined through negotiation.

Manner 1: A calling device (that is, the UE A) triggers a negotiation procedure.

S601. The UE A sends an invite request message to an IMS network device. Correspondingly, the IMS network device receives the invite request message from the UE A.

S602. The IMS network device sends the invite request message to the UE B. Correspondingly, the UE B receives the invite request message from the IMS network device.

For example, in this embodiment, an example in which the UE A is an initiator of a video call and the UE B is a receiver of the video call is used for description. The UE A sends the invite request message to the UE B via the IMS network device, and the invite request message is used to request to establish a video call connection between the UE A and the UE B.

It may be understood that the IMS network device herein is one or more network elements inside an IMS network, and an information exchange procedure between the network elements inside the IMS network is omitted in the figure.

Optionally, the invite request message includes an SDP offer #1, and the SDP offer #1 includes audio/video media information supported by the UE A.

The invite request message further includes HDR capability information #1, and the HDR capability information #1 indicates whether a video that can be sent and/or received by the UE A is an HDR video or a non-HDR video. When the HDR capability information #1 indicates that the video that can be sent and/or received by the UE A is an HDR video, the HDR capability information #1 further indicates an HDR standard set #1 for the HDR video that can be sent and/or received by the UE A, and the HDR standard set #1 includes one or more HDR standards. In a possible implementation, if the videos that can be sent and/or received by the UE A are both non-HDR videos, the UE A may not put the HDR capability information #1 in the invite request message, to implicitly indicate that the videos that can be sent and received by the UE A are both non-HDR videos, or indicate that the UE A cannot send or receive an HDR video.

In a possible example, the HDR capability information #1 may be carried in the SDP offer #1. For example, a separate line a attribute may be added to the SDP offer #1 to indicate the HDR capability information #1:
m=video 15014 RTP/AVP 123
b=AS:960
b=RR:6000
b=RS:8000
a=rtpmap:123 H264/90000
a=fmtp:123 profile-level-id=42801E;max-fs=4800;max-mbps=67200;packetization-mode=1;max-br=974;sprop-parameter-sets=Z2QAHqy1DwKJNQYBBQeEAhU=,aO48sA==
a=rtcp-fb:* trr-int 5000
a=rtcp-fb:* ccm fir
a=rtcp-fb:* ccm tmmbr
a=rtcp-fb:* nack
a=rtcp-fb:* nack pli
a=sendrecv
a=framerate:15
a=HDR capability=HDR10,HDR10+,HDRDV,HDRVV,HLG; mode=sendrecv/sendonly/recvonly

For another example, alternatively, a user-defined parameter may be added to a video fmtp attribute of the SDP offer #1 to indicate the HDR capability information #1:
m=video 15014 RTP/AVP 123
b=AS:960
b=RR:6000
b=RS:8000
a=rtpmap:123 H264/90000
a=fmtp:123 profile-level-id=42801E;max-fs=4800;max-mbps=67200;packetization-mode=1;max-br=974;sprop-parameter-sets=Z2QAHqy1DwKJNQYBBQeEAhU=,aO48sA==; hdr-capability=HDR10,HDR10+,HDRDV,HDRVV,HLG; hdr-mode=sendrecv/sendonly/recvonly a=rtcp-fb:* trr-int 5000
a=rtcp-fb:* ccm fir
a=rtcp-fb:* ccm tmmbr
a=rtcp-fb:* nack
a=rtcp-fb:* nack pli
a=sendrecv
a=framerate:15

The "mode" field in the foregoing examples indicates whether the video that can be sent and/or received by the UE A is an HDR video or a non-HDR video. For example, when the "mode" has a value of "sendrecv", it indicates that the videos that can be sent and received by the UE A are both HDR videos. When the "mode" has a value of "sendonly", it indicates that the video that can be sent by the UE A is an HDR video, and the video that can be received by the UE A is a non-HDR video. When the "mode" has a value of "recvonly", it indicates that the video that can be received by the UE is an HDR video, and the video that can be sent by the UE is a non-HDR video.

The "capability" field in the foregoing examples indicates an HDR standard for the video that can be sent and/or received by the UE A. For example, a value of the "capability" may include one or more of the following standards: HDR10, HDR10+, HDRDV, HDRVV, or HLG. HDRDV represents Dolby Vision. HDRVV represents HDR Vivid.

S603. The UE B determines whether a video to be sent and/or received is an HDR video or a non-HDR video.

For example, after receiving the invite request message, the UE B obtains the HDR capability information #1 from the invite request message, and then determines, based on the HDR capability information #1 and HDR capability information #2 of the UE B, whether a video to be sent by the UE B to the UE A (or a video to be received by the UE A from the UE B) is an HDR video or a non-HDR video, and/or whether a video to be received by the UE B from the UE A (or a video to be sent by the UE A to the UE B) is an HDR video or a non-HDR video. The HDR capability information #2 indicates whether a video that can be sent and/or received by the UE B is an HDR video or a non-HDR video. When the HDR capability information #2 indicates that the video that can be sent and/or received by the UE B is an HDR video, the HDR capability information #2 further indicates an HDR standard set #2 for the HDR video that can be sent and/or received by the UE B, and the HDR standard set #2 includes one or more HDR standards. A specific implementation is illustrated below.
(1) If the HDR capability information #1 does not indicate the HDR standard set #1, and/or the HDR capability information #2 does not indicate the HDR standard set #2, the UE B may directly perform a determining procedure in step (4). When the UE B determines that the video to be sent by the UE B to the UE A (or the video to be received by the UE A from the UE B) and/or the video to be received by the UE B from the UE A (or the video to be sent by the UE A to the UE B) is an HDR video, the UE B determines that an HDR standard used for the video to be sent by the UE B to the UE A (or the video to be received by the UE A from the UE B) and/or the video to be received by the UE B from the UE A (or the video to be sent by the UE A to the UE B) is a default HDR standard. The default HDR standard may be, for example, preconfigured for the UE B.
(2) When the HDR capability information #1 indicates the HDR standard set #1, and the HDR capability information #2 indicates the HDR standard set #2, the UE B determines whether an intersection set exists between the HDR standard set #1 and the HDR standard set #2, that is, the UE B determines whether the UE A and the UE B support one or more same HDR standards. If no intersection set exists between the HDR standard set #1 and the HDR standard set #2, the UE B determines that the video to be sent by the UE B to the UE A (or the video to be received by the UE A from the UE B) and the video to be received by the UE B from the UE A (or the video to be sent by the UE A to the UE B) are non-HDR videos. If an intersection set exists between the HDR standard set #1 and the HDR standard set #2, the UE B continues to perform a procedure in step (3).
(3) The UE B determines, in the intersection set between the HDR standard set #1 and the HDR standard set #2, an HDR standard to be used, that is, determines an HDR standard used for the HDR video to be sent by the UE B to the UE A and/or the HDR video to be received by the UE B from the UE A. If the intersection set between the HDR standard set #1 and the HDR standard set #2 includes only one HDR standard, the UE B determines to use this HDR standard, and continues to perform the procedure in step (4). If the intersection set between the HDR standard set #1 and the HDR standard set #2 includes a plurality of HDR standards, the UE B determines the HDR standard to be used from the plurality of HDR standards according to a preconfigured rule. The preconfigured rule herein may be preconfigured for the UE B, or may be sent by the UE A or the IMS network device to the UE B. This is not limited in this application. For example, an HDR standard priority sequence HDRVV>HDR10+>HDRVV>HDR10>HLG is preconfigured on the UE B, where a priority of an HDR standard on the left of ">" is higher than a priority of an HDR standard on the right of ">". In this case, the UE B determines the HDR standard to be used in the plurality of HDR standards based on the priority sequence, and the determined HDR standard is an HDR standard with a highest priority in the plurality of HDR standards.
(4) The UE B determines, based on the HDR capability information #1 and the HDR capability information #2, whether the video to be sent by the UE B to the UE A (or the video to be received by the UE A from the UE B) is an HDR video or a non-HDR video, and/or whether the video to be received by the UE B from the UE A (or the video to be sent by the UE A to the UE B) is an HDR video or a non-HDR video. The following uses Table 2 as an example for description.

**Table 2**

| Mode indicated by the HDR capability information #1 | Mode indicated by the HDR capability information #2 | Negotiation result |
|---|---|---|
| sendrecv | sendrecv | sendrecv |
| sendrecv | sendonly | sendonly |
| sendrecv | recvonly | recvonly |
| sendonly | sendrecv | recvonly |
| reevonly | sendrecv | sendonly |
| sendonly | recvonly | recvonly |
| sendonly | sendonly | Fail |
| recvonly | sendonly | sendonly |
| recvonly | recvonly | Fail |
| Not supported | Any value | Fail |
| Any value | Not supported | Fail |

When the mode indicated by the HDR capability information #1 is "sendrecv", and the mode indicated by the HDR capability information #2 is also "sendrecv", the UE B determines that the negotiation result is "sendrecv", that is, the video to be sent by the UE B to the UE A (or the video to be received by the UE A from the UE B) and the video to be received by the UE B from the UE A (or the video to be sent by the UE A to the UE B) are both HDR videos.

When the mode indicated by the HDR capability information #1 is "sendrecv", and the mode indicated by the HDR capability information #2 is "sendonly", the UE B determines that the negotiation result is "sendonly", that is, the video to be sent by the UE B to the UE A (or the video to be received by the UE A from the UE B) is an HDR video, and the video to be received by the UE B from the UE A (or the video to be sent by the UE A to the UE B) is a non-HDR video.

When the mode indicated by the HDR capability information #1 is "sendrecv", and the mode indicated by the HDR capability information #2 is "recvonly", the UE B determines that the negotiation result is "recvonly", that is, the video to be sent by the UE B to the UE A (or the video to be received by the UE A from the UE B) is a non-HDR video, and the video to be received by the UE B from the UE A (or the video to be sent by the UE A to the UE B) is an HDR video.

When the mode indicated by the HDR capability information #1 is "sendonly", and the mode indicated by the HDR capability information #2 is "sendrecv", the UE B determines that the negotiation result is "recvonly", that is, the video to be sent by the UE B to the UE A (or the video to be received by the UE A from the UE B) is a non-HDR video, and the video to be received by the UE B from the UE A (or the video to be sent by the UE A to the UE B) is an HDR video.

When the mode indicated by the HDR capability information #1 is "recvonly", and the mode indicated by the HDR capability information #2 is "sendrecv", the UE B determines that the negotiation result is "sendonly", that is, the video to be sent by the UE B to the UE A (or the video to be received by the UE A from the UE B) is an HDR video, and the video to be received by the UE B from the UE A (or the video to be sent by the UE A to the UE B) is a non-HDR video.

When the mode indicated by the HDR capability information #1 is "sendonly", and the mode indicated by the HDR capability information #2 is "sendonly", the UE B determines that the negotiation fails, that is, the video to be sent by the UE B to the UE A (or the video to be received by the UE A from the UE B) is a non-HDR video, and the video to be received by the UE B from the UE A (or the video to be sent by the UE A to the UE B) is a non-HDR video.

When the mode indicated by the HDR capability information #1 is "recvonly", and the mode indicated by the HDR capability information #2 is "sendonly", the UE B determines that the negotiation result is "sendonly", that is, the video to be sent by the UE B to the UE A (or the video to be received by the UE A from the UE B) is an HDR video, and the video to be received by the UE B from the UE A (or the video to be sent by the UE A to the UE B) is a non-HDR video.

When the mode indicated by the HDR capability information #1 is "recvonly", and the mode indicated by the HDR capability information #2 is "recvonly", the UE B determines that the negotiation fails, that is, the video to be sent by the UE B to the UE A (or the video to be received by the UE A from the UE B) is a non-HDR video, and the video to be received by the UE B from the UE A (or the video to be sent by the UE A to the UE B) is a non-HDR video.

When the UE A or the UE B does not support transmission of an HDR video, or the mode indicated by the UE A or the HDR capability information #2 indicates any other value, the UE B determines that the negotiation fails, that is, the video to be sent by the UE B to the UE A (or the video to be received by the UE A from the UE B) is a non-HDR video, and the video to be received by the UE B from the UE A (or the video to be sent by the UE A to the UE B) is a non-HDR video.

S604. The UE B sends a 18X/200 response message to the IMS network device. Correspondingly, the IMS network device receives the 18X/200 response message from the UE B.

S605. The IMS network device sends the 18X/200 response message to the UE A. Correspondingly, the UE A receives the 18X/200 response message from the IMS network device.

For example, after performing S603, the UE B sends the 18X/200 response message to the UE A via the IMS network device. The 18X/200 response message includes indication information #1, and the indication information #1 indicates whether the video to be sent by the UE B to the UE A (or the video to be received by the UE A from the UE B) is an HDR video or a non-HDR video, and/or whether the video to be received by the UE B from the UE A (or the video to be sent by the UE A to the UE B) is an HDR video or a non-HDR video. For convenience, an example in which the indication information #1 indicates whether the video to be sent by the UE B to the UE A and/or the video to be received by the UE B from the UE A is an HDR video or a non-HDR video is used for description subsequently.

Optionally, if the indication information #1 indicates that the video to be sent by the UE B to the UE A and/or the video to be received by the UE B from the UE A is an HDR video, the indication information #1 further indicates an HDR standard for the HDR video to be sent by the UE B to the UE A and/or the HDR video to be received by the UE B from the UE A.

Optionally, the 18X/200 response message includes an SDP answer #1, and the SDP answer #1 is media information determined by the UE B for a video call between the UE A and the UE B. In a possible example, the indication information #1 may be carried in the SDP answer #1. This case is illustrated below.

For example, when the negotiation succeeds, the UE B may add a separate line a attribute to the SDP answer #1 to carry the indication information #1:
m=video 15014 RTP/AVP 123
b=AS:960
b=RR:6000
b=RS:8000
a=rtpmap:123 H264/90000
a=fmtp:123 profile-level-id=42801E;max-fs=4800;max-mbps=67200;packetization-mode=1;max-br=974;sprop-parameter-sets=Z2QAHqy1DwKJNQYBBQeEAhU=,aO48sA==
a=rtcp-fb:* trr-int 5000
a=rtcp-fb:* ccm fir
a=rtcp-fb:* ccm tmmbr
a=rtcp-fb:* nack
a=rtcp-fb:* nack pli
a=sendrecv
a=framerate: 15
a=HDR capability=HDR10+; mode=sendrecv

The "a=HDR capability=HDR10+; mode=sendrecv" in the foregoing example indicates that the video to be sent by the UE B to the UE A and the video to be received by the UE B from the UE A are both HDR videos, and an HDR standard used for the HDR video to be sent by the UE B to the UE A and the HDR video to be received by the UE B from the UE A is "HDR10+".

For another example, when the negotiation succeeds, the UE B may add a self-defined parameter to a video fmtp attribute of the SDP answer #1 to carry the indication information #1:
m=video 15014 RTP/AVP 123
b=AS:960
b=RR:6000
b=RS:8000
a=rtpmap:123 H264/90000
a=fmtp:123 profile-level-id=42801E;max-fs=4800;max-mbps=67200;packetization-mode=1;max-br=974;sprop-parameter-sets=Z2QAHqy1DwKJNQYBBQeEAhU=,aO48sA==; hdr-capability=HDR10+; hdr-mode=sendrecv
a=rtcp-fb:* trr-int 5000
a=rtcp-fb:* ccm fir
a=rtcp-fb:* ccm tmmbr
a=rtcp-fb:* nack
a=rtcp-fb:* nack pli
a=sendrecv
a=framerate:15

The "hdr-capability=HDR10+; hdr-mode=sendrecv" in line a in the foregoing example indicates that the video to be sent by the UE B to the UE A and the video to be received by the UE B from the UE A are both HDR videos, and an HDR standard for the HDR video to be sent by the UE B to the UE A and the HDR video to be received by the UE B from the UE A is "HDR10+".

For another example, when the negotiation fails, the UE B may add a separate line a attribute to the SDP answer #1 to indicate that the negotiation fails:
m=video 15014 RTP/AVP 123
b=AS:960
b=RR:6000
b=RS:8000
a=rtpmap:123 H264/90000
a=fmtp:123 profile-level-id=42801E;max-fs=4800;max-mbps=67200;packetization-mode=1;max-br=974;sprop-parameter-sets=Z2QAHqy1DwKJNQYBBQeEAhU=,aO48sA==
a=rtcp-fb:* trr-int 5000
a=rtcp-fb:* ccm fir
a=rtcp-fb:* ccm tmmbr
a=rtcp-fb:* nack
a=rtcp-fb:* nack pli
a=sendrecv
a=framerate:15
a=HDR capability=none

The "a=HDR capability=none" in the foregoing example indicates that the video to be sent by the UE B to the UE A and the video to be received by the UE B from the UE A are both non-HDR videos, that is, no HDR video is used when a video call is performed between the UE B and the UE A.

For another example, when the negotiation fails, the UE B may add a user-defined parameter to the video fmtp attribute of the SDP answer #1 to indicate that the HDR negotiation fails:
m=video 15014 RTP/AVP 123
b=AS:960
b=RR:6000
b=RS:8000
a=rtpmap: 123 H264/90000
a=fmtp:123 profile-level-id=42801E;max-fs=4800;max-mbps=67200;packetization-mode=1;max-br=974;sprop-parameter-sets=Z2QAHqy1DwKJNQYBBQeEAhD=,aO48sA==; hdr-capability=none
a=rtcp-fb:* trr-int 5000
a=rtcp-fb:* ccm fir
a=rtcp-fb:* ccm tmmbr
a=rtcp-fb:* nack
a=rtcp-fb:* nack pli
a=sendrecv
a=framerate:15

The "hdr-capability=none" in line a in the foregoing example indicates that the video to be sent by the UE B to the UE A and the video to be received by the UE B from the UE A are both non-HDR videos.

For another example, when the negotiation fails, the UE B may not put the indication information #1 in the SDP answer #1, to implicitly indicate that the video to be sent by the UE B to the UE A and the video to be received by the UE B from the UE A are both non-HDR videos.

S606. The UE A and the UE B perform a video call based on the indication information #1 and a determining result.

For example, after receiving the indication information #1 from the UE B, the UE A sends a video to the UE B and/or receives a video from the UE B based on the indication information #1. It may be understood that, the video sent by the UE A to the UE B is video call content sent by the UE A to the UE B when the UE A performs the video call with the UE B, and the video received by the UE A from the UE B is video call content sent by the UE B to the UE A when the UE B performs the video call with the UE A. A specific process is illustrated below.

When the indication information #1 indicates that the video to be sent by the UE B to the UE A is an HDR video, and the video to be received by the UE B from the UE A is an HDR video, the UE A sends an HDR video to the UE B, and receives an HDR video from the UE B.

When the indication information #1 indicates that the video to be sent by the UE B to the UE A is an HDR video, and the video to be received by the UE B from the UE A is a non-HDR video, the UE A sends a non-HDR video to the UE B, and receives an HDR video from the UE B.

When the indication information #1 indicates that the video to be sent by the UE B to the UE A is a non-HDR video, and the video to be received by the UE B from the UE A is an HDR video, the UE A sends an HDR video to the UE B, and receives a non-HDR video from the UE B.

When the indication information #1 indicates that the video to be sent by the UE B to the UE A is a non-HDR video, and the video to be received by the UE B from the UE A is a non-HDR video, the UE A sends a non-HDR video to the UE B, and receives a non-HDR video from the UE B.

Correspondingly, the UE B sends the video to the UE A and/or receives the video from the UE A based on the determining result in S603. It may be understood that the video sent by the UE B to the UE A is video call content sent by the UE B to the UE A when the UE B performs the video call with the UE A, and the video received by the UE B from the UE A is video call content sent by the UE A to the UE B when the UE A performs the video call with the UE B.

When the UE B determines that the video to be sent by the UE B to the UE A is an HDR video, and the video to be received by the UE B from the UE A is an HDR video, the UE B sends an HDR video to the UE A, and receives an HDR video from the UE A.

When the UE B determines that the video to be sent by the UE B to the UE A is an HDR video, and the video to be received by the UE B from the UE A is a non-HDR video, the UE B sends an HDR video to the UE A, and receives a non-HDR video from the UE A.

When the UE B determines that the video to be sent by the UE B to the UE A is a non-HDR video, and the video to be received by the UE B from the UE A is an HDR video, the UE B sends a non-HDR video to the UE A, and receives an HDR video from the UE A.

When the UE B determines that the video to be sent by the UE B to the UE A is a non-HDR video, and the video to be received by the UE B from the UE A is a non-HDR video, the UE B sends a non-HDR video to the UE A, and receives a non-HDR video from the UE A.

Manner 2: A called device (that is, the UE B) triggers a negotiation procedure.

S607. The UE A sends an invite request message to the IMS network device. Correspondingly, the IMS network device receives the invite request message from the UE A.

S608. The IMS network device sends the invite request message to the UE B. Correspondingly, the UE B receives the invite request message from the IMS network device.

For example, the UE A sends the invite request message to the UE B via the IMS network, to initiate a video call to the UE B. In addition, the UE A does not put the audio/video media information in the invite request message.

S609. The UE B sends a 18X/200 response message to the IMS network device. Correspondingly, the IMS network device receives the 18X/200 response message from the UE B.

S610. The IMS network device sends the 18X/200 response message to the UE A. Correspondingly, the UE A receives the 18X/200 response message from the IMS network device.

For example, after ringing or going off-hook, the UE B sends the 18X/200 response message to the UE A via the IMS network device, where the 18X/200 response message carries the HDR capability information #2.

Optionally, the UE B puts an SDP offer #2 in the 18X/200 response message, and the SDP offer #2 includes audio/video media information supported by the UE B.

In a possible implementation, the HDR capability information #2 may be carried in the SDP offer #2. A specific implementation is similar to the implementation in which the UE A puts the HDR capability information #1 in the SDP offer #1 in S602, and details are not described herein again.

S611. The UE A determines whether a video to be sent and/or received by the UE A is an HDR video or a non-HDR video.

For example, after receiving the 18X/200 response message from the UE B, the UE A obtains the HDR capability information #2 from the 18X/200 response message, and then determines, based on the HDR capability information #2 and the HDR capability information #1, whether a video to be sent by the UE A to the UE B (or a video to be received by the UE B from the UE A) and/or a video to be received by the UE A from the UE B (or a video to be sent by the UE B to the UE A) is an HDR video or a non-HDR video. A specific implementation is similar to the determining manner of the UE B in S603, and details are not described herein again.

S612. The UE A sends a PRACK/ACK message to the IMS network device. Correspondingly, the IMS network device receives the PRACK/ACK message from the UE A.

S613. The IMS network device sends the PRACK/ACK message to the UE B. Correspondingly, the UE B receives the PRACK/ACK message from the IMS network device.

For example, after completing the determining in S611, the UE A sends the PRACK/ACK message to the UE B via the IMS network device. The PRACK/ACK message includes indication information #2, and the indication information #2 indicates whether the video to be sent by the UE A to the UE B (or the video to be received by the UE B from the UE A) and/or the video to be received by the UE A from the UE B (or the video to be sent by the UE B to the UE A) is an HDR video or a non-HDR video. When the indication information #2 indicates that the video to be sent by the UE A to the UE B (or the video to be received by the UE B from the UE A) and/or indicates that the video to be received by the UE A from the UE B (or the video to be sent by the UE B to the UE A) is an HDR video, the indication information #2 further indicates that an HDR standard used for the HDR video to be sent by the UE A to the UE B (or the HDR video to be received by the UE B from the UE A) and/or the HDR video to be received by the UE A from the UE B (or the HDR video to be sent by the UE B to the UE A).

Optionally, the UE A may put an SDP answer #2 in the PRACK/ACK message, and the SDP answer #2 includes audio/video media information determined by the UE A for a video call between the UE A and the UE B.

In a possible implementation, a specific implementation in which the UE A puts the indication information #2 in the SDP answer #2 is similar to the manner in which the UE B puts the indication information #1 in the SDP answer #1 in S604, and details are not described herein again.

S614. The UE A and the UE B perform a video call based on a determining result and the indication information #2.

It may be understood that, S614 is similar to S606, between which a difference lies in that in S606, the UE A determines, based on indication information (that is, the indication information #1), whether the video to be sent and/or received is an HDR video or a non-HDR video, and the UE B determines, based on the determining result in S603, whether the video to be sent and/or received is an HDR video or a non-HDR video; while in S614, the UE B determines, based on indication information (that is, the indication information #2), whether the video to be sent and/or received is an HDR video or a non-HDR video, and the UE A determines, based on the determining result in S611, whether the video to be sent and/or received is an HDR video or a non-HDR video. A specific process is not described herein again.

Scenario 2: Negotiation is performed in a process of switching an audio call connection to a video call connection.

S615. The UE A and the UE B start an audio call, that is, the UE A and the UE B establish an audio call connection. A specific process is not limited in this application.

S616. The UE A sends a re-invite request message to the IMS network device. Correspondingly, the IMS network device receives the re-invite request message from the UE A.

S617. The IMS network device sends the re-invite request message to the UE B. Correspondingly, the UE B receives the re-invite request message from the IMS network device.

For example, the UE A sends the re-invite request message to the UE B via the IMS network device, and the re-invite request message is used to request to switch the established audio call connection between the UE A and the UE B to a video call connection.

The re-invite request message includes the HDR capability information #1, and the HDR capability information #1 indicates whether the video that can be sent and/or received by the UE A is an HDR video or a non-HDR video. For details, refer to descriptions of the HDR capability information #1 in the S601 part. Details are not described herein again.

Optionally, the re-invite request message includes an SDP offer #3, and the SDP offer #3 includes the video media information supported by the UE A. In a possible example, the HDR capability information #1 may be carried in the SDP offer #3. A specific implementation is similar to the manner in which the UE A puts the HDR capability information #1 in the SDP offer #1 in S601, and details are not described herein again.

S618. The UE B determines whether a video to be sent and/or received by the UE B is an HDR video or a non-HDR video.

For example, after obtaining the HDR capability information #1 from the re-invite request message, the UE B determines, based on the HDR capability information #1 and the HDR capability information #2 of the UE B, whether the video to be sent and/or received by the UE B is an HDR video or a non-HDR video. A specific implementation is similar to the solution shown in S603, and details are not described herein again.

S619. The UE B sends a 200 response message to the IMS network device. Correspondingly, the IMS network device receives the 200 response message from the UE B.

S620. The IMS network device sends the 200 response message to the UE A. Correspondingly, the UE A receives the 200 response message from the IMS network device.

For example, after performing S618, the UE B sends the 200 response message to the UE A via the IMS network device, where the 200 response message carries indication information #3. The indication information #3 indicates whether the video to be sent by the UE B to the UE A (or the video to be received by the UE A from the UE B) is an HDR video or a non-HDR video, and/or whether the video to be received by the UE B from the UE A (or the video to be sent by the UE A to the UE B) is an HDR video or a non-HDR video. It may be understood that content indicated by the indication information #3 is similar to the content indicated by the indication information #1 described in the S604 part. For brevity, details are not described herein again.

Optionally, the 200 response message includes an SDP answer #3, and the SDP answer #3 is media information determined by the UE B for a video call between the UE A and the UE B. In a possible example, the indication information #3 may be carried in the SDP answer #3. A specific implementation is similar to the manner in which the UE B puts the indication information #1 in the SDP answer #1 in S604. Details are not described herein again.

It may be understood that S615 to S621 are described by using an example in which the UE A triggers the audio call connection to be switched to the video call connection. However, this application is not limited thereto. For example, alternatively, after the UE A and the UE B establish the audio call connection, the UE B may trigger the audio call connection to be switched to the video call connection. A specific implementation is similar to that in S616 to S620, and a specific process is not limited in this application.

S621. The UE A and the UE B perform a video call based on the indication information #3 and a determining result.

For example, after receiving the indication information #3 from the UE B, the UE A sends a video to the UE B and/or receives a video from the UE B based on the indication information #3. After S618, the UE B sends the video to the UE A and/or receives the video from the UE A based on the determining result in S618. A specific process is similar to that in S606. For brevity, details are not described herein again.

Further, optionally, if the video that can be sent and/or received by the UE A or the UE B changes, the negotiation procedure needs to be performed again. An example in which the video that can be sent by the UE A changes is used below for description.

S622. The UE A sends a re-invite request message to the IMS network device. Correspondingly, the IMS network device receives the re-invite request message from the UE A.

S623. The IMS network device sends the re-invite request message to the UE B. Correspondingly, the UE B receives the re-invite request message from the IMS network device.

For example, the UE A sends the re-invite request message to the UE B via the IMS network device, where the re-invite request message carries HDR capability information #3. The HDR capability information #3 is updated capability information of the UE A, the HDR capability information #3 is different from the HDR capability information #1, and the HDR capability information #3 indicates that the video that can be sent and/or received by the UE A is an HDR video or a non-HDR video.

S624. The UE B determines whether the video to be sent and/or received by the UE B is an HDR video or a non-HDR video.

For example, after receiving the re-invite request message, the UE B determines, based on the HDR capability information #3 and the HDR capability information #2 of the UE B, whether the video to be sent by the UE B to the UE A (or the video to be received by the UE A from the UE B) and/or the video to be received by the UE B from the UE A (or the video to be sent by the UE A to the UE B) is an HDR video or a non-HDR video. A specific implementation is similar to that in S603, and details are not described herein again.

Optionally, S625. The UE B sends a 200 response message to the IMS network device. Correspondingly, the IMS network device receives the 200 response message from the UE B.

Optionally, S626. The IMS network device sends the 200 response message to the UE A. Correspondingly, the UE A receives the 200 response message from the IMS network device.

For example, after completing HDR capability negotiation, the UE B sends the 200 response message to the UE A via the IMS network device, where the 200 response message carries indication information #4. The indication information #4 indicates whether the video to be sent to the UE A (or the video to be received by the UE A from the UE B) and/or the video to be received by the UE B from the UE A (or the video to be sent by the UE A to the UE B) is an HDR video or a non-HDR video.

Optionally, S627. The UE A and the UE B perform the video call based on the indication information #4 and a new determining result. A specific process is similar to that in S621, and details are not described herein again.

Based on the foregoing solution, the UE A or the UE B may determine, based on capabilities of the UE A and the UE B, whether a video to be sent and/or received is an HDR video or a non-HDR video. In this way, when the capabilities of the UEs performing a video call allow an HDR video, the HDR video may be transmitted, to improve a display effect of the video call; or when the capabilities of the UEs do not allow the HDR video, interaction may be performed by using a non-HDR video, to avoid a poor display effect of a video picture caused because a receive end cannot correctly display a received HDR video, while reducing resources consumed by interaction performed by a transmit end by using the HDR video.

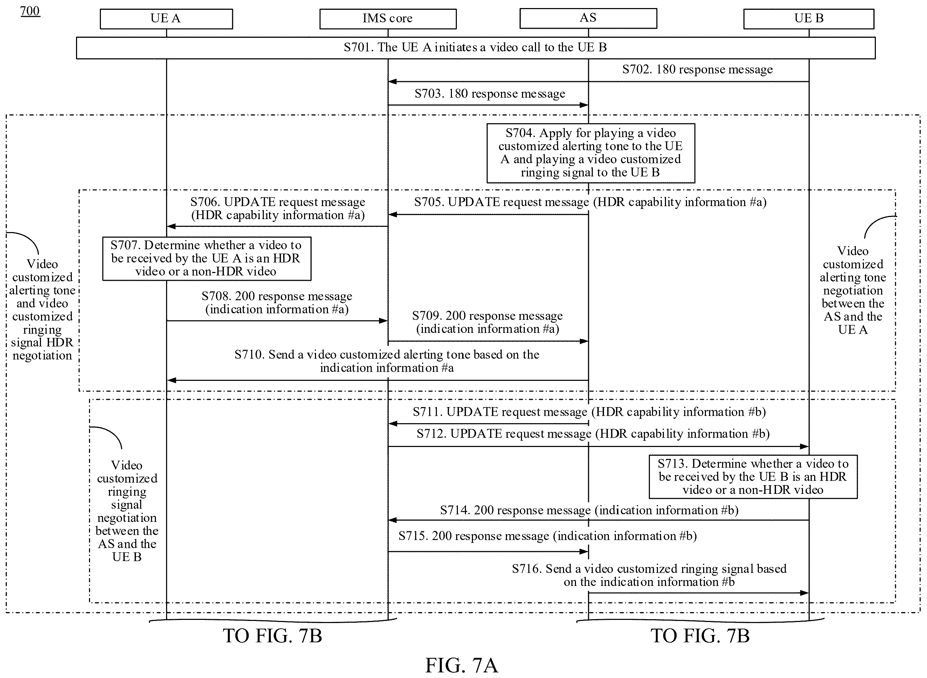

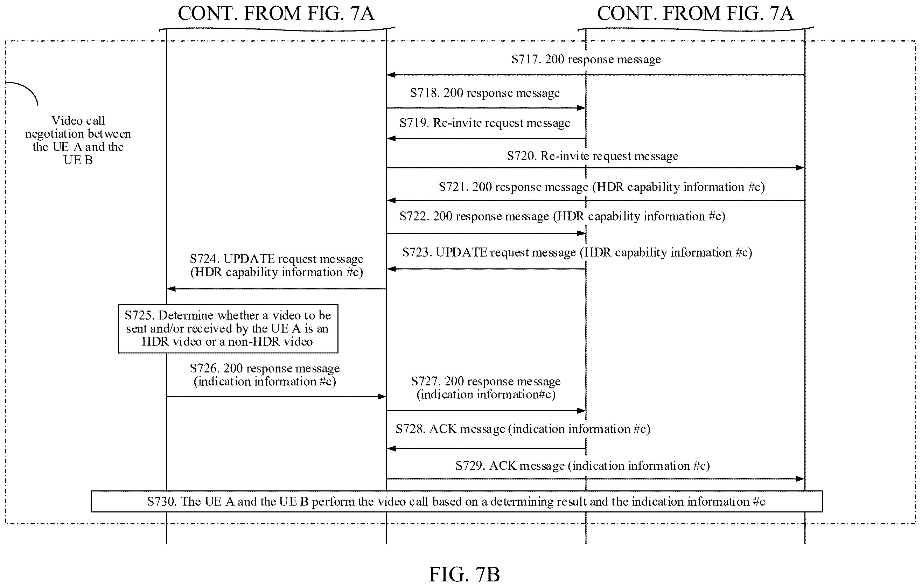

The following describes, with reference to FIG. 7A and FIG. 7B, a communication method 700 provided in an embodiment of this application. It may be understood that the method 700 is another possible implementation in which the method 500 is applied to an IMS call scenario. In a video customized alerting tone negotiation procedure shown in the method 700, an example in which the first communication device is an AS and the second communication device is a UE A is used for description. In a video customized ringing signal negotiation procedure shown in the method 700, an example in which the first communication device is the AS and the second communication device is a UE B is used for description. In a video call negotiation procedure shown in the method 700, an example in which the first communication device is the UE B and the second communication device is the UE A is used for description. The method 700 is illustrated below with reference to steps in FIG. 7A and FIG. 7B.

S701. The UE A initiates a video call to the UE B.

For example, it is assumed that the UE A is a calling device, the UE B is a called device, and the UE A initiates a video call procedure to the UE B via an IMS core and the AS. A specific process is not limited herein. Optionally, the UE A and the UE B may perform HDR negotiation in the video call procedure. A specific implementation may be the method shown in the method 600, and details are not described herein again.

S702. The UE B sends a 180 response message to the IMS core. Correspondingly, the IMS core receives the 180 response message from the UE B.

S703. The IMS core sends the 180 response message to the AS. Correspondingly, the AS receives the 180 response message from the IMS core.

For example, after ringing, the UE B returns the 180 response message to the AS via the IMS core.

S704. The AS applies for playing a video customized alerting tone to the UE A and playing a video customized ringing signal to the UE B.

For example, after receiving the 180 response message, the AS determines whether a called user has subscribed to a video customized alerting tones service and a video customized ringing signal service. If the called user has subscribed to the video customized alerting tones service, the AS applies for playing a video customized alerting tone to the UE A. If the called user has subscribed to the video customized ringing signal service, the AS applies for playing a video customized ringing signal to the UE B.

S705. The AS sends an UPDATE request message to the IMS core. Correspondingly, the IMS core receives the UPDATE request message from the AS.

S706. The IMS core sends the UPDATE request message to the UE A. Correspondingly, the UE A receives the UPDATE request message from the IMS core.

For example, when the AS determines to play a video customized alerting tone to the UE A, the AS sends the UPDATE request message to the UE A via the IMS core. The UPDATE request message includes HDR capability information #a, and the HDR capability information #a indicates whether a video that can be sent by the AS is an HDR video or a non-HDR video. When the HDR capability information #a indicates that the video that can be sent by the AS is an HDR video, the HDR capability information #a further indicates an HDR standard used for the HDR video that can be sent by the AS.

Optionally, the UPDATE request message includes an SDP offer #a, and the SDP offer #a includes audio/video media information supported by the AS for playing a video customized alerting tone. In a possible example, the HDR capability information #a may be carried in the SDP offer #a. A specific implementation is similar to the implementation in which the HDR capability information #1 is carried in the SDP offer #1 in S601 of the method 600, and details are not described herein again.

S707. The UE A determines whether a video to be received by the UE A is an HDR video or a non-HDR video.

For example, after obtaining the HDR capability information #a from the UPDATE request message, the UE A determines, based on the HDR capability information #a and HDR capability information of the UE A, whether a video to be received by the UE A from the AS (or a video to be sent by the AS to the UE A) is an HDR video or a non-HDR video. For a specific process, refer to S611 in the method 600. A difference lies in that in S707, the UE A may not determine whether a video to be sent by the UE A to the AS (or a video to be received by the AS from the UE A) is an HDR video or a non-HDR video. A specific process is not described herein again.

S708. The UE A sends a 200 response message to the IMS core. Correspondingly, the IMS core receives the 200 response message from the UE A.

S709. The IMS core sends the 200 response message to the AS. Correspondingly, the AS receives the 200 response message from the IMS core.

For example, after completing the determining procedure in S707, the UE A sends the 200 response message to the AS via the IMS core, where the 200 response message carries indication information #a. The indication information #a indicates whether the video to be received by the UE A from the AS (or the video to be sent by the AS to the UE A) is an HDR video or a non-HDR video.

Optionally, the 200 response message includes an SDP answer #a, and the SDP answer #a is media information determined by the UE A for video exchange between the UE A and the AS. In a possible example, the indication information #a may be carried in the SDP answer #a. A specific implementation is similar to the implementation in which the UE A puts the indication information #2 in the SDP answer #2 in S612 of the method 600. For brevity, details are not described herein again.

S710. The AS sends a video customized alerting tone to the UE A based on the indication information #a.

For example, after receiving the indication information #a from the UE A, the AS sends the video customized alerting tone to the UE A based on the indication information #a. For example, when the indication information #a indicates that the video to be received by the UE A from the AS is an HDR video (or the video to be sent by the AS to the UE A is an HDR video), the AS sends the video customized alerting tone in an HDR video format to the UE A. For another example, when the indication information #a indicates that the video to be received by the UE A from the AS is a non-HDR video (or the video to be sent by the AS to the UE A is a non-HDR video), the AS sends the video customized alerting tone in a non-HDR video format to the UE A.

S711. The AS sends an UPDATE request message to the IMS core. Correspondingly, the IMS core receives the UPDATE request message from the AS.

S712. The IMS core sends the UPDATE request message to the UE B. Correspondingly, the UE B receives the UPDATE request message from the IMS core.

For example, when the AS determines to play a video customized ringing signal to the UE B, the AS sends the UPDATE request message to the UE B via the IMS core. The UPDATE request message includes HDR capability information #b, and the HDR capability information #b indicates whether the video that can be sent by the AS is an HDR video or a non-HDR video. When the indication information #b indicates that the video that can be sent by the AS is an HDR video, the indication information #b further indicates the HDR standard used for the HDR video that can be sent by the AS.

Optionally, the UPDATE request message includes an SDP offer #b, and the SDP offer #b includes audio/video media information supported by the AS for playing a video customized ringing signal. In a possible example, the HDR capability information #b may be carried in the SDP offer #b. A specific implementation is similar to the implementation in which the HDR capability information #1 is carried in the SDP offer #1 in S601 of the method 600, and details are not described herein again.

S713. The UE B determines whether a video to be received by the UE B is an HDR video or a non-HDR video.

For example, after obtaining the HDR capability information #b from the UPDATE request message, the UE B determines, based on the HDR capability information #b and HDR capability information of the UE B, whether a video to be received by the UE B from the AS (or a video to be sent by the AS to the UE B) is an HDR video or a non-HDR video. A specific process is similar to that in S603 of the method 600, between which a difference lies in that in S713, the UE B may not determine whether a video to be sent by the UE B to the AS (or a video to be received by the AS from the UE B) is an HDR video or a non-HDR video. A specific process is not described herein again.

S714. The UE B sends a 200 response message to the IMS core. Correspondingly, the IMS core receives the 200 response message from the UE B.

S715. The IMS core sends the 200 response message to the AS. Correspondingly, the AS receives the 200 response message from the IMS core.

For example, after completing the determining procedure in S713, the UE B sends the 200 response message to the AS via the IMS core, where the 200 response message carries HDR indication information #b.

Optionally, the 200 response message includes an SDP answer #b, and the SDP answer #b includes media information determined by the UE B for video exchange between the UE B and the AS. In a possible example, the indication information #b may be carried in the SDP answer #b. A specific implementation is similar to the implementation in which the UE B puts the indication information #1 in the SDP answer #1 in S604 of the method 600. For brevity, details are not described herein again.

S716. The AS sends a video customized ringing signal to the UE B based on the HDR indication information #b.

For example, after receiving the indication information #b from the UE B, the AS sends the video customized ringing signal to the UE B based on the indication information #b. For example, if the indication information #b indicates that the video to be received by the UE B from the AS is an HDR video (or the video to be sent by the AS to the UE B is an HDR video), the AS sends the video customized ringing signal in an HDR video format to the UE B. For another example, when the indication information #b indicates that the video to be received by the UE B from the AS is a non-HDR video (or the video to be sent by the AS to the UE B is a non-HDR video), the AS sends the video customized alerting tone in a non-HDR video format to the UE B.

Further, after going off-hook, the UE B further performs HDR negotiation with the UE A.

S717. The UE B sends a 200 response message to the IMS core. Correspondingly, the IMS core receives the 200 response message from the UE B.

S718. The IMS core sends the 200 response message to the AS. Correspondingly, the AS receives the 200 response message from the IMS core.

For example, after the UE B goes off-hook, the UE B sends the 200 response message to the AS via the IMS core.

S719. The AS sends a re-invite request message to the IMS core. Correspondingly, the IMS core receives the re-invite request message from the AS.

S720. The IMS core sends the re-invite request message to the UE B. Correspondingly, the UE B receives the re-invite request message from the IMS core.

For example, after receiving the 200 response message from the UE B, the AS stops playing the video customized alerting tone to the UE A, stops playing the video customized ringing signal to the UE B, and initiates a re-invite message for media renegotiation of the UE B. It may be understood that the re-invite request message does not carry audio/video media information.

S721. The UE B sends a 200 response message to the IMS core. Correspondingly, the IMS core receives the 200 response message from the UE B.

S722. The IMS core sends the 200 response message to the AS. Correspondingly, the AS receives the 200 response message from the IMS core.

For example, after receiving the re-invite request message from the AS, the UE B sends the 200 response message to the AS via the IMS core, where the 200 response message carries HDR capability information #c. The HDR capability information #c indicates whether a video that can be sent and/or received by the UE B is an HDR video or a non-HDR video. When the HDR capability information #c indicates that the video that can be sent and/or received by the UE B is an HDR video, the HDR capability information #c further indicates an HDR standard used for the HDR video that can be sent and/or received by the UE B.

Optionally, the re-invite request message includes an SDP offer #c, and the SDP offer #c includes audio/video media information supported by the UE B. In a possible implementation, the UE B may put the HDR capability information #c in the SDP offer #c. A specific implementation is similar to the implementation in which the UE B puts the HDR indication information #1 in the SDP answer #1 in S604 of the method 600. For brevity, details are not described herein again.

S723. The AS sends an UPDATE request message to the IMS core. Correspondingly, the IMS core receives the UPDATE request message from the AS.

S724. The IMS core sends the UPDATE request message to the UE A. Correspondingly, the UE A receives the UPDATE request message from the IMS core.

For example, the AS sends the UPDATE request message to the UE A via the IMS core to trigger the UE A to perform HDR capability negotiation. The UPDATE request message includes the HDR capability information #c.

S725. The UE A determines whether a video to be sent and/or received by the UE A is an HDR video or a non-HDR video.

S725 is similar to S611 in the method 600. For brevity, details are not described herein again.

S726. The UE A sends a 200 response message to the IMS core. Correspondingly, the IMS core receives the 200 response message from the UE A.

S727. The IMS core sends the 200 response message to the AS. Correspondingly, the AS receives the 200 response message from the IMS core.

For example, after completing the determining shown in S725, the UE A sends the 200 response message to the AS via the IMS core, where the 200 response message carries HDR indication information #c. The indication information #c indicates whether a video to be sent by the UE A to the UE B (or a video to be received by the UE B from the UE A) is an HDR video or a non-HDR video, and/or whether a video to be received by the UE A from the UE B (or a video to be sent by the UE B to the UE A) is an HDR video or a non-HDR video.

Optionally, the 200 response message includes an SDP answer #c, and the SDP answer #c is media information determined by the UE A for a video call between the UE A and the UE B. In a possible example, the indication information #c may be carried in the SDP answer #c. A specific implementation is similar to the implementation in which the UE A puts the indication information #2 in the SDP answer #2 in S612 of the method 600. For brevity, details are not described herein again.

Optionally, the AS further sends an off-hook 200 message to the UE A, to indicate that the UE B is off-hook.

S728. The AS sends an ACK message to the IMS core. Correspondingly, the IMS core receives the ACK message from the AS.

S729. The IMS core sends the ACK message to the UE B. Correspondingly, the UE B receives the ACK message from the IMS core.

For example, after obtaining the HDR indication information from the 200 response message, the AS sends the ACK message to the UE B via the IMS core, where the ACK message carries the HDR indication information #c.

S730. The UE A and the UE B perform the video call based on the HDR indication information #c.

S730 is similar to S614 in the method 600. For brevity, details are not described herein again.

Based on the foregoing solution, the AS may determine, based on capabilities of the AS and the calling device (that is, the UE A), whether a video customized alerting tone to be sent to the UE A is an HDR video or a non-HDR video. In this way, when the capabilities of the AS and the UE A allow an HDR video, a video customized alerting tone in an HDR video format may be sent to the UE A, to improve a display effect of a video picture; or when the capability of the AS and/or the UE A does not allow an HDR video, a video customized alerting tone in a non-HDR video format may be sent to the UE A, to avoid a poor display effect of a video picture caused because a receive end cannot correctly display a received HDR video, while reducing resources consumed by sending the HDR video by the AS. Similarly, the AS may determine, based on capabilities of the AS and the called device (that is, the UE B), whether a video customized alerting tone to be sent to the UE B is an HDR video or a non-HDR video. In this way, when the capabilities of the AS and the UE B allow an HDR video, a video customized ringing signal in an HDR video format may be sent to the UE B, to improve a display effect of a video picture; or when the capability of the AS and/or the UE B does not allow an HDR video, a video customized ringing signal in a non-HDR video format may be sent to the UE B, to avoid a problem of a poor display effect of a video picture (for example, an abnormal color of the video picture) caused because a receive end cannot correctly display a received HDR video, while reducing resources consumed by interaction performed by the AS by using the HDR video.

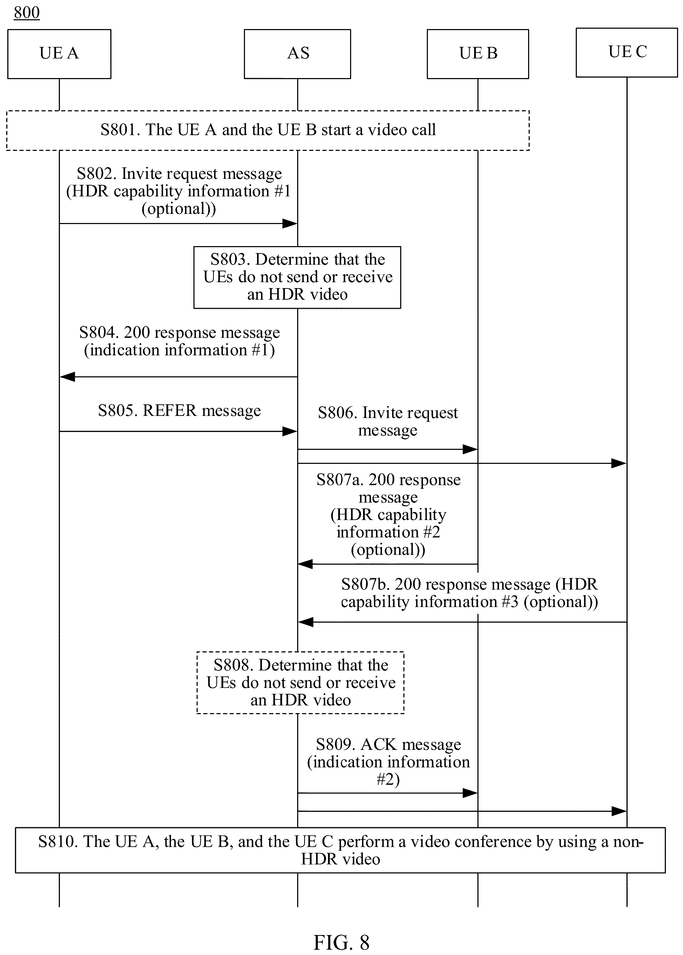

FIG. 8 is an example flowchart of a method 800 according to an embodiment of this application. In the method 800, an AS indicates, in a video conference scenario, that videos to be sent and received by UEs participating in a video conference are non-HDR videos.

The method 800 is illustrated below with reference to steps in FIG. 8.

Optionally, S801. A UE A and a UE B start a video call. A specific process is not limited in this application.

S802. The UE A sends an invite request to the AS. Correspondingly, the AS receives the invite request message from the UE A.

For example, the UE A sends the invite request message to the AS via an IMS core (not shown in the figure), to initiate a video conference. In this embodiment, it is assumed that the UE A applies for establishing a video conference with the UE B and a UE C. Therefore, in this embodiment, the video conference includes three UEs. However, this application is not limited thereto.

Optionally, the UE A puts HDR capability information #1 in the invite request message to request to perform HDR negotiation with another UE. In a possible implementation, the UE A may put the HDR capability information #1 in an SDP offer #1. For a specific implementation, refer to descriptions of the S601 part in the method 600. Details are not described herein again.

S803. The AS determines that the UEs do not send or receive an HDR video.

For example, after receiving the invite request message from the UE A, the AS determines, based on the invite request message, that a current scenario is a video conference scenario, and determines, based on the video conference scenario, that the UEs participating in the video conference do not send or receive an HDR video, or in other words, the AS determines, based on the video conference scenario, that videos to be sent or received by the UEs participating in the video conference are non-HDR videos, or the AS determines, based on the video conference scenario, not to trigger HDR negotiation between the UEs participating in the conference.

S804. The AS sends a 200 response message to the UE A. Correspondingly, the UE A receives the 200 response message from the AS.

For example, when the AS determines that the UEs participating in the video conference do not send or receive an HDR video, the AS returns the 200 response message to the UE A. In an implementation, the AS puts indication information #1 in the 200 response message. The indication information #1 indicates that videos to be sent and received by the UE A are non-HDR videos, or the indication information #1 indicates the UE A not to send or receive an HDR video, or the indication information #1 indicates the UE A not to trigger HDR negotiation, or the indication information #1 indicates an HDR negotiation failure. For a specific example of the indication information #1, refer to descriptions of the S604-S605 part in the method 600. Details are not described herein again.

S805. The UE A sends a REFER message to the AS. Correspondingly, the AS receives the REFER message from the UE A.

For example, the UE A sends the REFER message to the AS to apply for adding the UE B and the UE C into the conference.

S806. The AS sends an invite request message to each of the UE B and the UE C. Correspondingly, the UE B and the UE C receive the invite request message from the AS.

S807a. The UE B sends a 200 response message to the AS. Correspondingly, the AS receives the 200 response message from the UE B.

S807b. The UE C sends a 200 response message to the AS. Correspondingly, the AS receives the 200 response message from the UE C.

For example, after receiving the 200 response message from the AS, the UE B and the UE C returns the 200 response messages to the AS. Optionally, the UE B and the UE C may further put HDR capability information of the UE B and the UE C in the 200 response messages respectively.

Optionally, S808. The AS determines that the UEs do not send or receive an HDR video.

For example, if the UE B or the UE C carries the HDR capability information of the UE B or the UE C in the 200 response message, the AS may determine whether videos to be sent and/or received by the UEs participating in the video conference are HDR videos or non-HDR videos. The AS may determine, based on the video conference scenario, that the videos to be sent and received by the UEs participating in the video conference are non-HDR videos, or in other words, the AS determines, based on the video conference scenario, not to trigger HDR negotiation between the UEs.

S809. The AS sends an ACK message to each of the UE B and the UE C. Correspondingly, the UE B and the UE C receive the ACK message from the AS.

For example, after receiving the 200 response messages from the UE B and the UE C, the AS returns the ACK message to each of the UE B and the UE C.

The AS puts indication information #2 in the ACK message to indicate that videos to be sent and received by the UE B and the UE C are non-HDR videos, or the indication information #2 indicates that the UE B and the UE C do not send or receive an HDR video, or the indication information #2 indicates the UE B and the UE C not to trigger HDR negotiation, or the indication information #2 indicates an HDR negotiation failure.

It may be understood that the AS may determine, based on a determining result in S803, that the videos to be sent and received by the UE B and the UE C are non-HDR videos, or may determine, based on a determining result in S808 (if the AS performs S808), that the videos to be sent and received by the UE B and the UE C are non-HDR videos. This is not limited in this application.

S810. The UE A, the UE B, and the UE C perform the video conference by using a non-HDR video.

For example, the UE A determines, based on the indication information #1, that the videos to be sent and received are non-HDR videos, and the UE B and the UE C determine, based on the indication information #2, that the videos to be sent and received are non-HDR videos. In this case, the UE A, the UE B, and the UE C perform the video conference by using a non-HDR video, that is, the UE A, the UE B, and the UE C send non-HDR videos to each other when performing the video conference.

Based on the foregoing solution, the AS indicates, in a video conference scenario, UEs participating in a video conference not to send or receive an HDR video, to avoid HDR capability information negotiation between the UEs, thereby reducing a waste of resources.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that technical features described in the foregoing method embodiments are also applicable to the following apparatus embodiments. Therefore, for content that is not described in detail, refer to the foregoing method embodiments. For brevity, details are not described herein again.

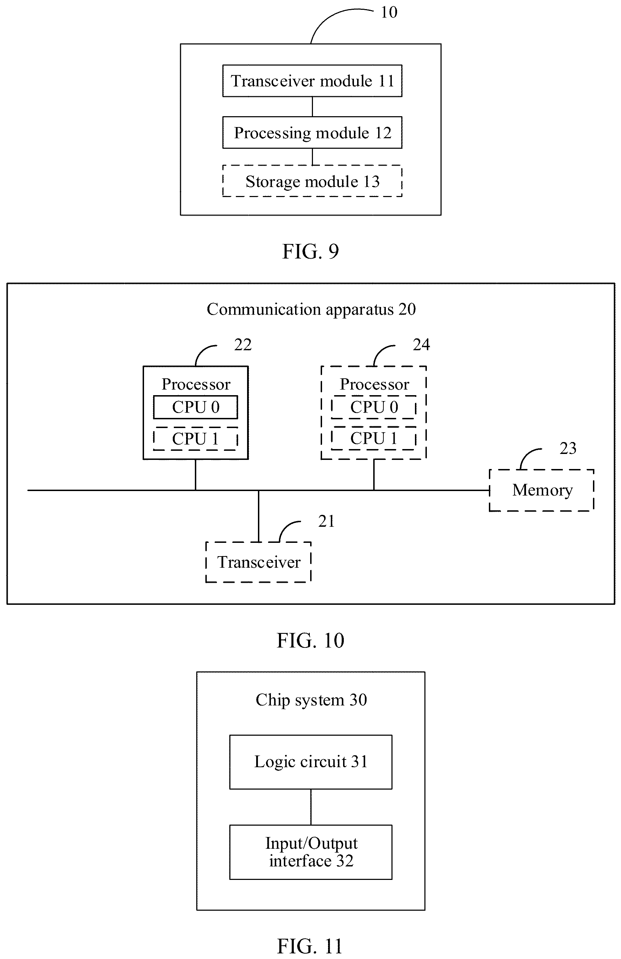

FIG. 9 is a block diagram of a communication apparatus 10 according to an embodiment of this application. The apparatus 10 includes a transceiver module 11 and/or a processing module 12. The transceiver module 11 can implement a corresponding communication function, and the processing module 12 is configured to perform data processing, or in other words, the transceiver module 11 is configured to perform receiving and sending-related operations, and the processing module 12 is configured to perform operations other than receiving and sending. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, to cause the apparatus to implement an action of a device or a network element in the foregoing method embodiments.

In a first design, the apparatus 10 may correspond to the first communication device in the foregoing method embodiments (for example, the first communication device in FIG. 5, or the UE or the AS in FIG. 6 to FIG. 8), or may be a component (for example, a chip) of the first communication device.

The apparatus 10 may implement steps or procedures performed by the first communication device in the foregoing method embodiments. The transceiver module 11 may be configured to perform receiving and sending-related operations of the first communication device in the foregoing method embodiments. The processing module 12 may be configured to perform processing-related operations of the first communication device in the foregoing method embodiments.

In a possible implementation, the apparatus 10 may implement steps or procedures performed by the first communication device in the method 500 or the UE in the method 600 to the method 800 in the foregoing method embodiments. For example, the transceiver module 11 is configured to send first capability information to a second communication device. The first capability information indicates whether a video that can be sent and/or received by the first communication device is a high dynamic range HDR video or a non-HDR video. The transceiver module 11 is further configured to receive first indication information from the second communication device. The first indication information indicates whether a video to be sent by the second communication device to the first communication device or a video to be received by the first communication device from the second communication device is an HDR video or a non-HDR video, and/or whether a video to be received by the second communication device from the first communication device or a video to be sent by the first communication device to the second communication device is an HDR video or a non-HDR video. The processing module 12 is configured to send a video to the second communication device and/or receive a video from the second communication device based on the first indication information.

In a second design, the apparatus 10 may correspond to the second communication device in the foregoing method embodiments (for example, the second communication device in FIG. 5, or the UE B in FIG. 6 to FIG. 8), or may be a component (for example, a chip) of the second communication device.

The apparatus 10 may implement steps or procedures performed by the second communication device in the foregoing method embodiments. The transceiver module 11 may be configured to perform receiving and sending-related operations of the second communication device in the foregoing method embodiments. The processing module 12 may be configured to perform processing-related operations of the second communication device in the foregoing method embodiments. For example, the transceiver module 11 is configured to receive first capability information from a first communication device. The first capability information indicates whether a video that can be sent and/or received by the first communication device is a high dynamic range HDR video or a non-HDR video. The transceiver module 11 is further configured to send first indication information to the first communication device. The first indication information indicates whether a video to be sent by the second communication device to the first communication device or a video to be received by the first communication device from the second communication device is an HDR video or a non-HDR video, and/or whether a video to be received by the second communication device from the first communication device or a video to be sent by the first communication device to the second communication device is an HDR video or a non-HDR video.

It should be understood that specific processes in which the modules perform the foregoing corresponding steps are described in detail in the foregoing method embodiments. For brevity, details are not described herein.

It should be further understood that the apparatus 10 herein is embodied in a form of a functional module. The term "module" herein may be an application-specific integrated circuit (application-specific integrated circuit, ASIC), an electronic circuit, a processor (for example, a shared processor, a dedicated processor, or a group processor) for executing one or more software or firmware programs, a memory, an integrated logic circuit, and/or another suitable component that supports the described function. In an optional example, a person skilled in the art may understand that the apparatus 10 may be specifically the terminal device in the foregoing embodiments, and may be configured to perform procedures and/or steps corresponding to the terminal device in the foregoing method embodiments; or the apparatus 10 may be specifically the network device in the foregoing embodiments, and may be configured to perform procedures and/or steps corresponding to the network device in the foregoing method embodiments. To avoid repetition, details are not described herein again.

The apparatus 10 in the foregoing solutions has a function of implementing corresponding steps performed by the device (for example, the first communication device or the second communication device) in the foregoing methods. The function may be implemented by hardware, or may be implemented by hardware executing corresponding software. The hardware or the software includes one or more modules corresponding to the foregoing function. For example, the transceiver module may be replaced with a transceiver (for example, a sending unit in the transceiver module may be replaced with a transmitter, and a receiving unit in the transceiver module may be replaced with a receiver), and another unit such as the processing module may be replaced with a processor, to respectively perform receiving and sending operations and processing-related operations in the method embodiments.

In addition, the transceiver module 11 may alternatively be a transceiver circuit (for example, may include a receiving circuit and a sending circuit), and the processing module may be a processing circuit.

FIG. 10 is a diagram of another communication apparatus 20 according to an embodiment of this application. The apparatus 20 includes a processor 22. The processor 22 is configured to execute a computer program or instructions stored in a memory 23, or read data/signaling stored in the memory 23, to perform the methods in the foregoing method embodiments. Optionally, the apparatus 20 may further include a processor 24.

Optionally, as shown in FIG. 10, the apparatus 20 further includes the memory 23, and the memory 23 is configured to store the computer program or the instructions and/or the data. The memory 23 may be integrated with the processor 22, or may be disposed separately. Optionally, there are one or more memories 23.

Optionally, as shown in FIG. 10, the apparatus 20 further includes a transceiver 21, and the transceiver 21 is configured to receive and/or send a signal. For example, the processor 22 is configured to control the transceiver 21 to receive and/or send the signal.

In a solution, the apparatus 20 is configured to implement operations performed by the first communication device in the foregoing method embodiments.

In another solution, the apparatus 20 is configured to implement operations performed by the second communication device in the foregoing method embodiments.

It should be understood that, the processor mentioned in this embodiment of this application may be a central processing unit (central processing unit, CPU) or another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in this embodiment of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described herein is intended to include but is not limited to these and any other appropriate type of memory.

FIG. 11 is a diagram of a chip system 30 according to an embodiment of this application. The chip system 30 (or referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, to cause the chip system 30 to implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the first communication device in the foregoing method embodiments.

For example, the logic circuit 31 is configured to implement processing-related operations performed by the first communication device in the foregoing method embodiments, for example, processing-related operations performed by the first communication device in the embodiment shown in FIG. 5 or the UE A or the AS in FIG. 6 to FIG. 8. The input/output interface 32 is configured to implement sending and/or receiving-related operations performed by the first communication device in the foregoing method embodiments, for example, sending and/or receiving-related operations performed by the first communication device in the embodiment shown in FIG. 5 or the UE A or the AS in FIG. 6 to FIG. 8.

In another solution, the chip system 30 is configured to implement operations performed by the second communication device in the foregoing method embodiments, for example, processing-related operations performed by the second communication device in the embodiment shown in FIG. 5 or the UE B in FIG. 6 to FIG. 8. The input/output interface 32 is configured to implement sending and/or receiving-related operations performed by the second communication device in the foregoing method embodiments, for example, sending and/or receiving-related operations performed by the second communication device in the embodiment shown in FIG. 5 or the UE B in FIG. 6 to FIG. 8.

An embodiment of this application further provides a computer-readable storage medium. The computer-readable storage medium stores computer instructions for implementing a method performed by a device in the foregoing method embodiments.

An embodiment of this application further provides a computer program product, including instructions. When the instructions are executed by a computer, a method performed by a device in the foregoing method embodiments is implemented.

An embodiment of this application further provides a communication system, including the first communication device and the second communication device.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the foregoing described apparatus embodiment is merely an example. For example, the division into the units is merely a logical function division and another division manner may be used in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing embodiments may be all or partly implemented by using software, hardware, firmware, or any combination thereof. When software is used for implementation, all or a part of the embodiments may be implemented in a form of a computer program product. The computer program product includes one or more computer instructions. When the computer program instructions are loaded and executed on a computer, all or a part of the procedures or functions according to embodiments of this application are generated. The computer may be a general-purpose computer, a dedicated computer, a computer network, or other programmable apparatuses. For example, the computer may be a personal computer, a server, or a network device. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (solid state drive, SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a first communication device, first capability information to a second communication device, wherein the first capability information indicates whether a video that can be sent and/or received by the first communication device is a high dynamic range HDR video or a non-HDR video;
receiving, by the first communication device, first indication information from the second communication device, wherein the first indication information indicates whether a video to be sent by the second communication device to the first communication device or a video to be received by the first communication device from the second communication device is an HDR video or a non-HDR video, and/or whether a video to be received by the second communication device from the first communication device or a video to be sent by the first communication device to the second communication device is an HDR video or a non-HDR video; and
sending, by the first communication device, a video to the second communication device and/or receiving a video from the second communication device based on the first indication information.

2. The method according to claim 1, wherein when the first capability information indicates that the video that can be sent and/or received by the first communication device is an HDR video, the first capability information further indicates an HDR standard set for the HDR video that can be sent and/or received by the first communication device.

3. The method according to claim 1 or 2, wherein
if the first indication information indicates that the video to be sent by the second communication device to the first communication device or the video to be received by the first communication device from the second communication device is an HDR video, sending, by the first communication device, the video to the second communication device and/or receiving the video from the second communication device based on the first indication information comprises: receiving, by the first communication device, an HDR video from the second communication device.

4. The method according to claim 3, wherein if the first indication information further indicates an HDR standard used for the HDR video to be sent by the second communication device to the first communication device or the HDR video to be received by the first communication device from the second communication device, receiving, by the first communication device, the HDR video from the second communication device comprises: receiving, by the first communication device, an HDR video for which the HDR standard is used from the second

5. The method according to claim 1 or 2, wherein
if the first indication information indicates that the video to be sent by the second communication device to the first communication device or the video to be received by the first communication device from the second communication device is a non-HDR video, sending, by the first communication device, the video to the second communication device and/or receiving the video from the second communication device based on the first indication information comprises: receiving, by the first communication device, a non-HDR video from the second communication device.

6. The method according to any one of claims 1 to 5, wherein
if the first indication information indicates that the video to be received by the second communication device from the first communication device or the video to be sent by the first communication device to the second communication device is an HDR video, sending, by the first communication device, the video to the second communication device and/or receiving the video from the second communication device based on the first indication information comprises: sending, by the first communication device, an HDR video to the second communication device.

7. The method according to claim 6, wherein
if the first indication information further indicates an HDR standard used for the HDR video to be received by the second communication device from the first communication device or the HDR video to be sent by the first communication device to the second communication device, sending, by the first communication device, the HDR video to the second communication device comprises: sending, by the first communication device, an HDR video for which the HDR standard is used to the second communication device.

8. The method according to any one of claims 1 to 5, wherein
if the first indication information indicates that the video to be received by the second communication device from the first communication device or the video to be sent by the first communication device to the second communication device is a non-HDR video, sending, by the first communication device, the video to the second communication device and/or receiving the video from the second communication device based on the first indication information comprises: sending, by the first communication device, a non-HDR video to the second communication device.

9. The method according to any one of claims 1 to 8, wherein the first communication device is a first terminal device, the second communication device is a second terminal device, and the first terminal device and the second terminal device are in a same internet protocol multimedia subsystem IMS session service.

10. The method according to claim 9, wherein sending, by the first communication device, the first capability information to the second communication device comprises:
sending, by the first communication device, an invite invite request message to the second communication device, wherein the invite request message is used to request to establish a video call connection between the first communication device and the second communication device, and the invite request message comprises the first capability information; and
receiving, by the first communication device, the first indication information from the second communication device comprises:
receiving, by the first communication device, a response message for the invite request message from the second communication device, wherein the response message comprises the first indication information.

11. The method according to claim 9, wherein
sending, by the first communication device, the first capability information to the second communication device comprises:
sending, by the first communication device, a re-invite re-invite request message to the second communication device, wherein the re-invite request message is used to request to switch an established audio call connection between the first communication device and the second communication device to a video call connection, and the re-invite request message comprises the first capability information; and
receiving, by the first communication device, the first indication information from the second communication device comprises:
receiving, by the first communication device, a response message for the re-invite request message from the second communication device, wherein the response message comprises the first indication information.

12. The method according to any one of claims 9 to 11, wherein the method further comprises:
receiving, by the first communication device, third capability information from an application server, wherein the third capability information indicates whether a video that can be sent by the application server is an HDR video or a non-HDR video; determining, by the first communication device based on the first capability information and the third capability information, whether a video to be received by the first communication device from the application server or a video to be sent by the application server to the first communication device is an HDR video or a non-HDR video; and sending, by the first communication device, second indication information to the application server, wherein the second indication information indicates whether the video to be received by the first communication device from the application server or the video to be sent by the application server to the first communication device is an HDR video or a non-HDR video.

13. The method according to any one of claims 9 to 12, wherein after the first communication device receives the first indication information from the second communication device, the method further comprises:
sending, by the first communication device, fourth capability information to the second communication device, wherein the fourth capability information indicates whether the video that can be sent and/or received by the first communication device is a high dynamic range HDR video or a non-HDR video, and the fourth capability information is different from the first capability information;
receiving, by the first communication device, third indication information from the second communication device, wherein the third indication information indicates whether the video to be sent by the second communication device to the first communication device or the video to be received by the first communication device from the second communication device is an HDR video or a non-HDR video, and/or whether the video to be received by the second communication device from the first communication device or the video to be sent by the first communication device to the second communication device is an HDR video or a non-HDR video; and
continuing, by the first communication device, to send a video to the second communication device and/or receive a video from the second communication device based on the third indication information.

14. The method according to any one of claims 1 to 8, wherein the first communication device is an application server, and the second communication device is a terminal device.

15. A communication method, comprising:
receiving, by a second communication device, first capability information from a first communication device, wherein the first capability information indicates whether a video that can be sent and/or received by the first communication device is a high dynamic range HDR video or a non-HDR video; and
sending, by the second communication device, first indication information to the first communication device based on the first capability information and second capability information of the second communication device, wherein the second capability information indicates whether a video that can be sent and/or received by the second communication device is an HDR video or a non-HDR video, and the first indication information indicates whether a video to be sent by the second communication device to the first communication device or a video to be received by the first communication device from the second communication device is an HDR video or a non-HDR video, and/or whether a video to be received by the second communication device from the first communication device or a video to be sent by the first communication device to the second communication device is an HDR video or a non-HDR video.

16. The method according to claim 15, wherein the method further comprises:
determining, by the second communication device based on the first capability information and the second capability information, whether the video to be sent by the second communication device to the first communication device or the video to be received by the first communication device from the second communication device is an HDR video or a non-HDR video, and/or whether the video to be received by the second communication device from the first communication device or the video to be sent by the first communication device to the second communication device is an HDR video or a non-HDR video.

17. The method according to claim 15, wherein the method further comprises:
when the second communication device determines that the video to be sent by the second communication device to the first communication device or the video to be received by the first communication device from the second communication device is an HDR video, sending, by the second communication device, an HDR video to the first communication device.

18. The method according to claim 17, wherein the first capability information indicates that the video that can be sent and/or received by the first communication device is an HDR video and indicates a first HDR standard set for the HDR video that can be sent and/or received by the first communication device, and the second capability information indicates that the video that can be sent and/or received by the second communication device is an HDR video and indicates a second HDR standard set for the HDR video that can be sent and/or received by the second communication device;
the method further comprises: determining, by the second communication device in an intersection set between the first HDR standard set and the second HDR standard set, an HDR standard used for the HDR video to be sent by the second communication device to the first communication device or the HDR video to be received by the first communication device from the second communication device, wherein the first indication information further indicates the HDR standard; and
sending, by the second communication device, the HDR video to the first communication device comprises: sending, by the second communication device, an HDR video for which the HDR standard is used to the first communication device.

19. The method according to claim 15, wherein the method further comprises:
when the second communication device determines that the video to be sent by the second communication device to the first communication device or the video to be received by the first communication device from the second communication device is a non-HDR video, sending, by the second communication device, a non-HDR video to the first communication device.

20. The method according to any one of claims 15 to 18, wherein the method further comprises:
when the second communication device determines that the video to be received by the second communication device from the first communication device or the video to be sent by the first communication device to the second communication device is an HDR video, receiving, by the second communication device, an HDR video from the first communication device.

21. The method according to claim 20, wherein the first capability information indicates that the video that can be sent and/or received by the first communication device is an HDR video and indicates the first HDR standard set for the HDR video that can be sent and/or received by the first communication device, and the second capability information indicates that the video that can be sent and/or received by the second communication device is an HDR video and indicates the second HDR standard set for the HDR video that can be sent and/or received by the second communication device;
the method further comprises: determining, by the second communication device in the intersection set between the first HDR standard set and the second HDR standard set, an HDR standard used for the video to be received by the second communication device from the first communication device or the video to be sent by the first communication device to the second communication device, wherein the first indication information further indicates the HDR standard; and
receiving, by the second communication device, the HDR video from the first communication device comprises: receiving, by the second communication device, an HDR video for which the HDR standard is used from the first communication device.

22. The method according to any one of claims 15 to 18, wherein the method further comprises:
when the second communication device determines that the video to be received by the second communication device from the first communication device or the video to be sent by the first communication device to the second communication device is a non-HDR video, receiving, by the second communication device, a non-HDR video from the first communication device.

23. The method according to any one of claims 15 to 21, wherein the first communication device is a first terminal device, the second communication device is a second terminal device, and the first terminal device and the second terminal device are in a same internet protocol multimedia subsystem IMS session service.

24. The method according to claim 22, wherein
receiving, by the second communication device, the first capability information from the first communication device comprises:
receiving, by the second communication device, an invite invite request message from the first communication device, wherein the invite request message is used to request to establish a video call connection between the first communication device and the second communication device, and the invite request message comprises the first capability information; and
sending, by the second communication device, the first indication information to the first communication device comprises:
sending, by the second communication device, a response message for the invite request message to the first communication device, wherein the response message comprises the first indication information.

25. The method according to claim 22, wherein
receiving, by the second communication device, the first capability information from the first communication device comprises:
receiving, by the second communication device, a re-invite re-invite request message from the first communication device, wherein the re-invite request message is used to request to switch an established audio call connection between the first communication device and the second communication device to a video call connection, and the re-invite request message comprises the first capability information; and
sending, by the second communication device, the first indication information to the first communication device comprises:
sending, by the second communication device, a response message for the re-invite request message to the first communication device, wherein the response message comprises the first indication information.

26. The method according to any one of claims 22 to 24, wherein the method further comprises:
receiving, by the second communication device, third capability information from an application server, wherein the third capability information indicates whether a video that can be sent by the application server is an HDR video or a non-HDR video;
determining, by the second communication device based on the second capability information and the third capability information, whether a video to be received by the second communication device from the application server or a video to be sent by the application server to the second communication device is an HDR video or a non-HDR video; and
sending, by the second communication device, third indication information to the application server, wherein the third indication information indicates whether the video to be received by the second communication device from the application server or the video to be sent by the application server to the first communication device is an HDR video or a non-HDR video.

27. The method according to any one of claims 22 to 26, wherein after the second communication device sends the first indication information to the first communication device based on the first capability information and the second capability information of the second communication device, the method further comprises:
receiving, by the second communication device, fourth capability information from the first communication device, wherein the fourth capability information indicates whether the video that can be sent and/or received by the first communication device is a high dynamic range HDR video or a non-HDR video, and the fourth capability information is different from the first capability information; and
sending, by the second communication device, third indication information to the first communication device based on the fourth capability information and the second capability information of the second communication device, wherein the third indication information indicates whether the video to be sent by the second communication device to the first communication device or the video to be received by the first communication device from the second communication device is an HDR video or a non-HDR video, and/or whether the video to be received by the second communication device from the first communication device or the video to be sent by the first communication device to the second communication device is an HDR video or a non-HDR video.

28. The method according to any one of claims 15 to 22, wherein the second communication device is a terminal device, and the first communication device is an application server.

29. A communication method, comprising:
sending, by a first communication device, first capability information to a second communication device, wherein the first capability information indicates whether a video that can be sent and/or received by the first communication device is a high dynamic range HDR video or a non-HDR video;
receiving, by the second communication device, the first capability information from the first communication device;
sending, by the second communication device, first indication information to the first communication device based on the first capability information and second capability information of the second communication device, wherein the second capability information indicates whether a video that can be sent and/or received by the second communication device is an HDR video or a non-HDR video, and the first indication information indicates whether a video to be sent by the second communication device to the first communication device or a video to be received by the first communication device from the second communication device is an HDR video or a non-HDR video, and/or whether a video to be received by the second communication device from the first communication device or a video to be sent by the first communication device to the second communication device is an HDR video or a non-HDR video;
receiving, by the first communication device, the first indication information from the second communication device; and
sending, by the first communication device, a video to the second communication device and/or receiving a video from the second communication device based on the first indication information.

30. The method according to claim 29, wherein the method further comprises:
determining, by the second communication device based on the first capability information and the second capability information, whether the video to be sent by the second communication device to the first communication device or the video to be received by the first communication device from the second communication device is an HDR video or a non-HDR video, and/or whether the video to be received by the second communication device from the first communication device or the video to be sent by the first communication device to the second communication device is an HDR video or a non-HDR video.

31. The method according to claim 30, wherein when the second communication device determines that the video to be sent by the second communication device to the first communication device or the video to be received by the first communication device from the second communication device is an HDR video, the method further comprises: sending, by the second communication device, an HDR video to the first communication device; and
sending, by the first communication device, the video to the second communication device and/or receiving the video from the second communication device based on the first indication information comprises:
receiving, by the first communication device, the HDR video from the second communication device based on the first indication information, wherein the first indication information indicates that the video to be sent by the second communication device to the first communication device or the video to be received by the first communication device from the second communication device is an HDR video.

32. The method according to claim 28, wherein when the second communication device determines that the video to be sent by the second communication device to the first communication device or the video to be received by the first communication device from the second communication device is a non-HDR video, the method further comprises: sending, by the second communication device, a non-HDR video to the first communication device; and
sending, by the first communication device, the video to the second communication device and/or receiving the video from the second communication device based on the first indication information comprises:
receiving, by the first communication device, the non-HDR video from the second communication device based on the first indication information, wherein the first indication information indicates that the video to be sent by the second communication device to the first communication device or the video to be received by the first communication device from the second communication device is a non-HDR video.

33. The method according to any one of claims 28 to 30, wherein when the second communication device determines that the video to be received by the second communication device from the first communication device or the video to be sent by the first communication device to the second communication device is an HDR video, the method further comprises: receiving, by the second communication device, an HDR video from the first communication device; and
sending, by the first communication device, the video to the second communication device and/or receiving the video from the second communication device based on the first indication information comprises: sending, by the first communication device, the HDR video to the second communication device based on the first indication information, wherein the first indication information indicates that the video to be received by the second communication device from the first communication device or the video to be sent by the first communication device to the second communication device is an HDR video.

34. The method according to any one of claims 28 to 30, wherein when the second communication device determines that the video to be received by the second communication device from the first communication device or the video to be sent by the first communication device to the second communication device is a non-HDR video, the method further comprises: receiving, by the second communication device, a non-HDR video from the first communication device; and
sending, by the first communication device, the video to the second communication device and/or receiving the video from the second communication device based on the first indication information comprises: sending, by the first communication device, the non-HDR video to the second communication device based on the first indication information, wherein the first indication information indicates that the video to be received by the second communication device from the first communication device or the video to be sent by the first communication device to the second communication device is a non-HDR video.

35. A communication apparatus, wherein the apparatus comprises a module configured to perform the method according to any one of claims 1 to 14, or a module configured to perform the method according to any one of claims 15 to 28.

36. A communication apparatus, comprising:
a processor, configured to execute a computer program stored in a memory, to cause the apparatus to perform the method according to any one of claims 1 to 14, or cause the apparatus to perform the method according to any one of claims 15 to 28.

37. A computer program product, wherein the computer program product comprises instructions for performing the method according to any one of claims 1 to 14, or the computer program product comprises instructions for performing the method according to any one of claims 15 to 28.

38. A computer-readable storage medium, wherein the computer-readable storage medium stores a computer program; and when the computer program is run on a computer, the computer is caused to perform the method according to any one of claims 1 to 14, or the computer is caused to perform the method according to any one of claims 15 to 28.

39. A communication system, comprising a first communication device and a second communication device, wherein
the first communication device is configured to perform the method according to any one of claims 1 to 14, and the second communication device is configured to perform the method according to any one of claims 15 to 28.
